# EUROPEAN PATENT APPLICATION

(11) **EP 4 561 149 A1**
(43) Date of publication of application: **28.05.2025**
(21) Application number: 23848923.1
(22) Date of filing: 21.04.2023
(51) Int. Cl.: H04W 24/02, H04W 48/08, H04W 60/00

(54) **NETWORK SLICE MANAGEMENT METHOD, COMMUNICATION APPARATUS, AND COMMUNICATION SYSTEM**

(30) Priority: 01.08.2022 CN 202210918518
(71) Applicant: Huawei Technologies Co., Ltd., Shenzhen, Guangdong 518129 (CN)
(72) Inventor: ZHU, Fenqin, Shenzhen, Guangdong 518129 (CN); POE, Wint Yi, Shenzhen, Guangdong 518129 (CN)
(74) Representative: Grünecker Patent- und Rechtsanwälte PartG mbB
(86) International application number: PCT/CN2023/089694
(87) International publication number: WO 2024/027212

(57) **Abstract**

Embodiments of this application provide a network slice management method, a communication apparatus, and a communication system. The method includes: When a quantity of remaining registrable terminal devices in a network slice managed by a management device is less than a first threshold, the management device subsequently grants a registration request of a terminal device only whose registration type is update registration, to avoid service interruption caused by a registration failure of a terminal device having a service continuity requirement, thereby ensuring service continuity of the terminal device.

## Description

### CROSS-REFERENCE TO RELATED APPLICATIONS

This application claims priority to Chinese Patent Application No. 202210918518.8, filed with the China National Intellectual Property Administration on August 1, 2022 and entitled "NETWORK SLICE MANAGEMENT METHOD, COMMUNICATION APPARATUS, AND COMMUNICATION SYSTEM", which is incorporated herein by reference in its entirety.

### TECHNICAL FIELD

Embodiments of this application relate to the field of communication technologies, and in particular, to a network slice management method, a communication apparatus, and a communication system.

### BACKGROUND

Network slicing is a key technology of a 5th generation (5th generation, 5G) mobile communication system proposed by the 3rd generation partnership project (3rd generation partnership project, 3GPP) to address a network differentiation requirement. A 5G physical network may be abstracted into a plurality of network slices. Each of the network slices forms an end-to-end logical network, and the network slices are logically isolated from and independent of each other. Therefore, the network slice is a logical network, with specific network features, obtained by dividing a communication network of an operator. Each logical network slice is identified by using single network slice selection assistance information (single network slice selection assistance information, S-NSSAI). The 5G network selects a network slice for a terminal device based on the S-NSSAI in a registration request message sent by the terminal device.

When creating a network slice for a customer based on a customer order, an operator usually determines service level agreement (service level agreement, SLA) technical indicators of the network slice based on an actual service requirement. A scale of the network slice is generally based on these SLA technical indicators. Scales of network slices subscribed to by different customers are usually different. A most common scale parameter includes a maximum user quantity for a network slice, which is also referred to as a user quantity quota for a network slice. The maximum user quantity for the network slice is a maximum quantity of terminal devices that are allowed to simultaneously access the network slice. In a running process of the network slice, the operator limits network slice users to be within the scale of the network slice when the users use a network resource, for example, limits, based on the maximum user quantity for the network slice, a quantity of users registered with the network slice. If the quantity of users registered with the network slice reaches the maximum user quantity for the network slice, the network denies other user registration with the network slice. In this way, a quantity of users who actually use the network slice can be limited to be within the scale of the network slice.

Currently, a user quantity quota for a network slice may be divided between different areas in advance, and each area manages a part of the quota for the network slice. Then, a network slice management network element in the area manages the part of the quota for the network slice in the area, for example, determines, based on a remaining quota (also referred to as a quantity of remaining registrable terminal devices) for the network slice in the area, whether to accept a request of a new terminal device for registering with the network slice.

When a terminal device has registered with the network slice in an area, the terminal device may need to re-register with the network slice in another area due to cross-service-area movement of the terminal device, radio access technology switching, roaming, or the like. However, a remaining quota for the network slice managed by a network slice management network element in another area may be 0. In this case, the terminal device is denied registration with the network slice. Consequently, a service of the terminal device is interrupted, and service continuity of the terminal device cannot be ensured.

### SUMMARY

Embodiments of this application provide a network slice management method, a communication apparatus, and a communication system, to ensure service continuity of a terminal device.

According to a first aspect, an embodiment of this application provides a network slice management method. The method may be performed by a management device or a module (for example, a chip) used in a management device. An example in which the management device performs the method is used. The method includes: The management device receives a first request message from a network slice management network element, where the first request message includes identification information of a terminal device, identification information of a network slice, and first indication information, the first indication information indicates a registration type of the terminal device, and the first request message is used to request to grant access of the terminal device to the network slice. When a quantity of remaining registrable terminal devices in the network slice managed by the management device is less than a first threshold, and the registration type is initial registration, the management device sends second indication information to the network slice management network element, where the second indication information indicates to reject access of the terminal device to the network slice. When the quantity of remaining registrable terminal devices in the network slice managed by the management device is less than the first threshold, and the registration type is update registration, the management device sends third indication information to the network slice management network element, and modifies the quantity of remaining registrable terminal devices in the network slice managed by the management device, where the third indication information indicates to grant access of the terminal device to the network slice.

In the foregoing solution, when the quantity of remaining registrable terminal devices in the network slice managed by the management device is less than the first threshold, and the quantity of remaining registrable terminal devices is greater than 0, the management device subsequently grants a registration request of a terminal device only whose registration type is update registration, to avoid service interruption caused by a registration failure of a terminal device having a service continuity requirement, thereby ensuring service continuity of the terminal device.

In a possible implementation, when the quantity of remaining registrable terminal devices in the network slice managed by the management device is greater than or equal to the first threshold, the management device sends fourth indication information to the network slice management network element, where the fourth indication information indicates to grant access of the terminal device to the network slice.

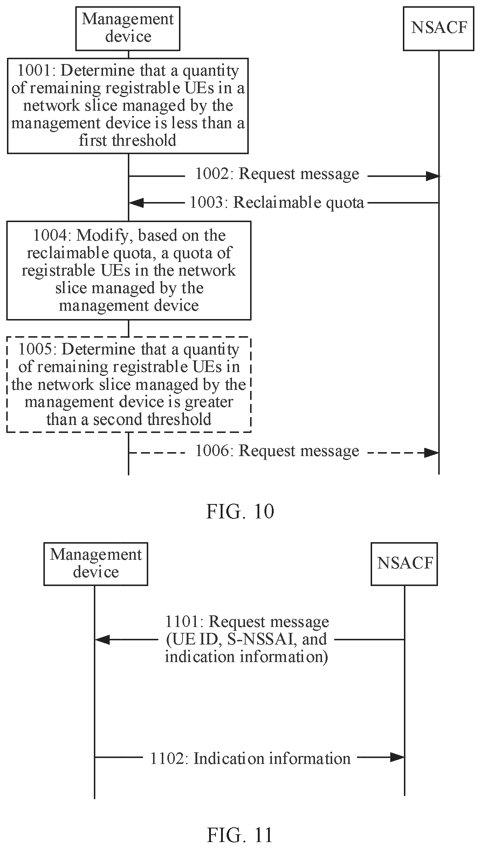

For example, for the method in the first aspect, refer to the descriptions in FIG. 11.

According to a second aspect, an embodiment of this application provides a network slice management method. The method may be performed by a management device or a module (for example, a chip) used in a management device. An example in which the management device performs the method is used. The method includes: The management device receives a first request message from a first network slice management network element, where the first request message includes identification information of a terminal device and identification information of a network slice, the first request message is used to request to grant access of the terminal device to the network slice, and the management device is a network slice management network element configured to manage a terminal device having a service continuity requirement. When a quantity of remaining registrable terminal devices in the network slice managed by the management device is equal to 0, the management device sends first indication information to the first network slice management network element, where the first indication information indicates to grant access of the terminal device to the network slice. The management device sends a second request message to at least one network slice management network element corresponding to the management device, where the second request message is used to request for or subscribe to reclamation of a quota of registrable terminal devices in the network slice managed by the at least one network slice management network element.

In the foregoing solution, for the terminal device having the service continuity requirement, if a user quantity quota for the network slice managed by the management device is already allocated, the management device may first grant temporary permission to the terminal device. To be specific, the management device grants access of the terminal device to the network slice, and then requests the network slice management network element to reclaim a user quantity quota. After the user quantity quota is successfully reclaimed, the management device determines that the permission is successfully granted to the terminal device. Because the management device can successfully grant a request of the terminal device to access the network slice, service continuity of the terminal device can be ensured.

In a possible implementation, after the management device sends the first indication information to the first network slice management network element, the management device starts a timer, where the timer indicates maximum duration of temporary permission to access of the terminal device to the network slice.

In a possible implementation, when the management device receives a quota allowed to be reclaimed from the at least one network slice management network element before the timer expires, the management device modifies, based on the quota allowed to be reclaimed, a quota of registrable terminal devices in the network slice managed by the management device.

The management device modifies the quantity of remaining registrable terminal devices in the network slice managed by the management device.

In a possible implementation, when the timer expires and the management device fails to receive a quota allowed to be reclaimed from the at least one network slice management network element, the management device sends second indication information to the first network slice management network element, where the second indication information indicates to reject access of the terminal device to the network slice.

In a possible implementation, the management device sends a third request message to the at least one network slice management network element, where the third request message is used to request to stop reclamation of the quota of registrable terminal devices in the network slice managed by the at least one network slice management network element.

In a possible implementation, the first request message further includes third indication information, and the third indication information indicates a registration type of the terminal device. Before sending the first indication information to the first network slice management network element, the management device determines that the registration type is update registration.

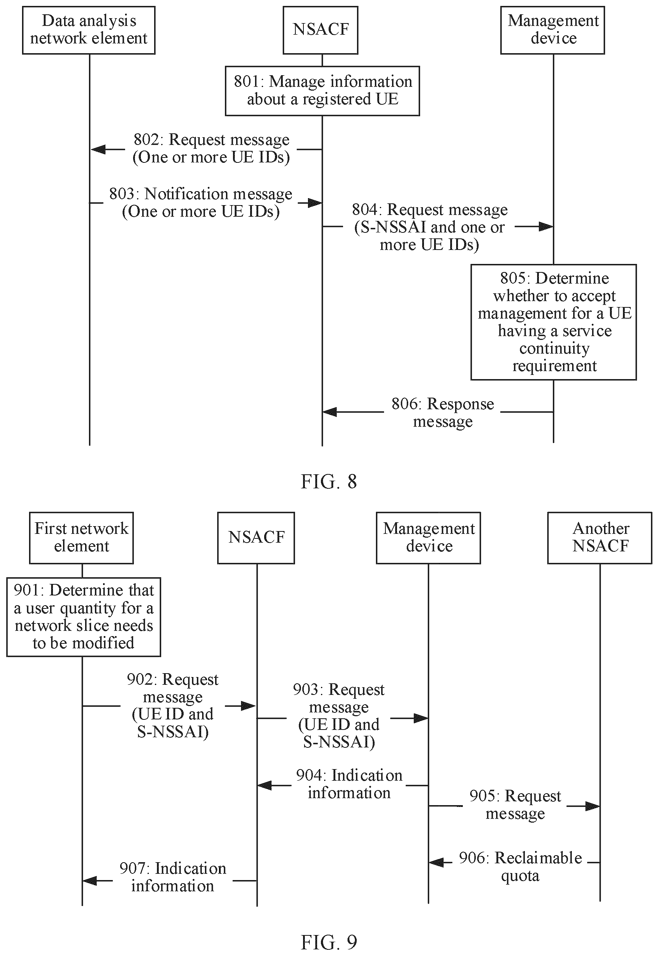

For example, for the method in the second aspect, refer to the descriptions in FIG. 9.

According to a third aspect, an embodiment of this application provides a network slice management method. The method may be performed by a management device or a module (for example, a chip) used in a management device. An example in which the management device performs the method is used. The method includes: When a quantity of remaining registrable terminal devices in a network slice managed by the management device is less than a first threshold, the management device sends a first request message to at least one network slice management network element corresponding to the management device, where the first request message is used to request for or subscribe to reclamation of a quota of registrable terminal devices in the network slice managed by the at least one network slice management network element. The management device receives a quota allowed to be reclaimed from the at least one network slice management network element. The management device modifies, based on the quota allowed to be reclaimed, a quota of registrable terminal devices in the network slice managed by the management device.

The first threshold is a positive integer. When the first threshold is equal to 1, it indicates that when the quantity of remaining registrable terminal devices in the network slice managed by the management device is equal to 0, the management device sends the first request message to the at least one network slice management network element corresponding to the management device, to request to reclaim the quota of the network slice.

In the foregoing solution, the management device may dynamically adjust the quota of registrable terminal devices in the network slice managed by the management device, to ensure that a sufficient quota is allocated to terminal devices that need permission, and avoid service interruption caused by a registration failure of the terminal device. Therefore, service continuity of the terminal device can be ensured.

In a possible implementation, the management device sends a second request message to the at least one network slice management network element, where the second request message is used to request to stop reclamation of the quota of registrable terminal devices in the network slice managed by the at least one network slice management network element.

In a possible implementation, before sending the second request message to the at least one network slice management network element, the management device determines that the quota of registrable terminal devices in the network slice managed by the management device is greater than a second threshold, where the second threshold is greater than the first threshold.

For example, for the method in the third aspect, refer to the descriptions in FIG. 10.

According to a fourth aspect, an embodiment of this application provides a network slice management method. The method may be performed by a management device or a module (for example, a chip) used in a management device. An example in which the management device performs the method is used. The method includes: The management device receives a request message from a network slice management network element, where the request message includes identification information of a network slice and identification information of a terminal device having a service continuity requirement, and the request message is used to request to manage use of the network slice by the terminal device having the service continuity requirement. The management device determines, based on a quantity of remaining registrable terminal devices in the network slice managed by the management device, whether to accept management for the terminal device having the service continuity requirement.

In the foregoing solution, the management device manages the terminal device having the service continuity requirement. Subsequently, when the terminal device moves across service areas, or a radio access technology of the terminal device changes, or the terminal device roams, the management device grants the terminal device permission to use the network slice. This can ensure that the permission is successfully granted to the terminal device, thereby ensuring service continuity of the terminal device.

In a possible implementation, the management device sends identification information of at least one terminal device to the network slice management network element, where the at least one terminal device is a terminal device whose management is accepted by the management device.

In a possible implementation, the management device modifies, based on a quantity of the at least one terminal device, the quantity of remaining registrable terminal devices in the network slice managed by the management device.

In a possible implementation, the management device stores a part or all of the following information: the identification information of the at least one terminal device, the identification information of the network slice, or identification information of the network slice management network element.

For example, for the method in the fourth aspect, refer to the descriptions in FIG. 8.

According to a fifth aspect, an embodiment of this application provides a network slice management method. The method may be performed by a network slice management network element or a module (for example, a chip) used in a network slice management network element. An example in which the network slice management network element performs the method is used. The method includes: The network slice management network element determines a terminal device having a service continuity requirement in a terminal device managed by the network slice management network element. The network slice management network element sends a first request message to a management network element, where the first request message includes identification information of a network slice and identification information of the terminal device having the service continuity requirement, the first request message is used to request to manage use of the network slice by the terminal device having the service continuity requirement, and the management device is a network slice management network element configured to manage the terminal device having the service continuity requirement.

In the foregoing solution, the network slice management network element determines the terminal device having the service continuity requirement, and then the network slice management network element sends information about the terminal device having the service continuity requirement to the management device, so that the management device manages the terminal device having the service continuity requirement. Subsequently, when the terminal device moves across service areas, or a radio access technology of the terminal device changes, or the terminal device roams, the management device grants the terminal device permission to use the network slice. This can ensure that the permission is successfully granted to the terminal device, thereby ensuring service continuity of the terminal device.

In a possible implementation, that the network slice management network element determines a terminal device having a service continuity requirement in a terminal device managed by the network slice management network element includes: The network slice management network element sends a second request message to a data analysis network element, where the second request message includes identification information of the terminal device managed by the network slice management network element, and the second request message is used to request to analyze whether the terminal device has the service continuity requirement. The network slice management network element receives a notification message from the data analysis network element, where the notification message includes the identification information of the terminal device having the service continuity requirement.

In the foregoing solution, the data analysis network element determines, through analysis, the terminal device having the service continuity requirement, so that the terminal device having the service continuity requirement can be accurately determined.

In a possible implementation, that the network slice management network element determines a terminal device having a service continuity requirement in a terminal device managed by the network slice management network element includes: The network slice management network element obtains subscription data of the terminal device managed by the network slice management network element. The network slice management network element determines, based on the subscription data of the terminal device managed by the network slice management network element, the terminal device having the service continuity requirement in the terminal device managed by the network slice management network element.

In the foregoing solution, the terminal device having the service continuity requirement can be accurately determined based on the subscription data of the terminal devices.

In a possible implementation, the network slice management network element receives identification information of at least one terminal device from the management device, where the at least one terminal device is a terminal device that is in the terminal device having the service continuity requirement and whose management is accepted by the management device. The network slice management network element deletes information that is about the at least one terminal device and that is stored in the network slice management network element, and modifies, based on a quantity of the at least one terminal device, a quantity of remaining registrable terminal devices in the network slice managed by the network slice management network element.

For example, for the method in the fifth aspect, refer to the descriptions in FIG. 8.

According to a sixth aspect, an embodiment of this application provides a network slice management method. The method may be performed by a network slice management network element or a module (for example, a chip) used in a network slice management network element. An example in which the network slice management network element performs the method is used. The method includes: The network slice management network element receives a first request message from a first network element, where the first request message includes identification information of a terminal device, identification information of a network slice, and first indication information, the first indication information indicates that the terminal device is subject to service continuity, and the first request message is used to request to grant access of the terminal device to the network slice. The network slice management network element sends a second request message to a management device based on the first indication information, where the second request message includes the identification information of the terminal device, the identification information of the network slice, and the first indication information, the second request message is used to request to grant access of the terminal device to the network slice, and the management device is a network slice management network element configured to manage a terminal device having a service continuity requirement.

In the foregoing solution, for the terminal device having the service continuity requirement, after receiving the first request message used to request to grant the terminal device permission to use the network slice, the network slice management network element forwards the first request message to the management device, and the management device grants the terminal device the permission to use the network slice and manages information about the terminal device. Therefore, when the terminal device moves across service areas, or a radio access technology of the terminal device changes, or the terminal device roams, the management device grants the terminal device the permission to use the network slice. This can avoid a problem of user quantity quota insufficiency caused by a change of the network slice management network element. Therefore, the permission can be successfully granted to the terminal device, thereby ensuring service continuity of the terminal device.

In a possible implementation, the network slice management network element receives second indication information from the management device, where the second indication information indicates to grant or reject access of the terminal device to the network slice. The network slice management network element sends the second indication information to the first network element.

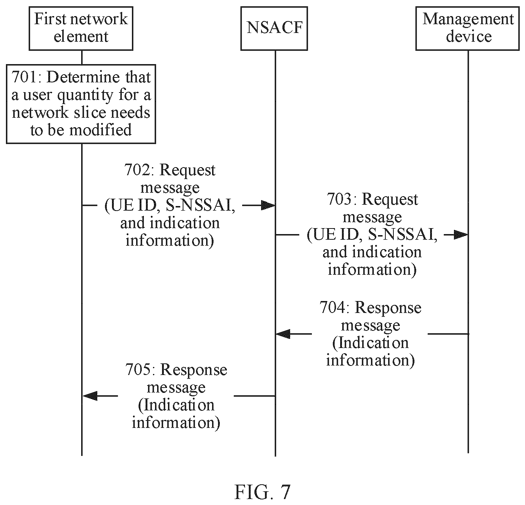

For example, for the method in the sixth aspect, refer to the descriptions in FIG. 7.

According to a seventh aspect, an embodiment of this application provides a communication apparatus. The apparatus may be a management device or a module (for example, a chip) used in a management device. The apparatus has a function of implementing any implementation in the first aspect to the fourth aspect. The function may be implemented by hardware, or may be implemented by hardware executing corresponding software. The hardware or the software includes one or more modules corresponding to the function.

According to an eighth aspect, an embodiment of this application provides a communication apparatus. The apparatus may be a network slice management network element or a module (for example, a chip) used in a network slice management network element. The apparatus has a function of implementing any implementation in the fifth aspect or the sixth aspect. The function may be implemented by hardware, or may be implemented by hardware executing corresponding software. The hardware or the software includes one or more modules corresponding to the function.

According to a ninth aspect, an embodiment of this application provides a communication apparatus, including units or means (means) for performing steps of any implementation in the first aspect to the sixth aspect.

According to a tenth aspect, an embodiment of this application provides a communication apparatus, including a processor and an interface circuit. The processor is configured to communicate with another apparatus by using the interface circuit, and perform any implementation in the first aspect to the sixth aspect. There are one or more processors.

According to an eleventh aspect, an embodiment of this application provides a communication apparatus, including a processor coupled to a memory. The processor is configured to invoke a program stored in the memory, to perform any implementation in the first aspect to the sixth aspect. The memory may be located inside or outside the apparatus. In addition, there may be one or more processors.

According to a twelfth aspect, an embodiment of this application provides a communication apparatus, including a processor and a memory. The memory is configured to store computer instructions. When the apparatus runs, the processor executes the computer instructions stored in the memory, to enable the apparatus to perform any implementation in the first aspect to the sixth aspect.

According to a thirteenth aspect, an embodiment of this application further provides a computer-readable storage medium. The computer-readable storage medium stores instructions. When the instructions are run on a communication apparatus, any implementation in the first aspect to the sixth is performed.

According to a fourteenth aspect, an embodiment of this application further provides a computer program product. The computer program product includes a computer program or instructions. When the computer program or the instructions are run by a communication apparatus, any implementation in the first aspect to the sixth aspect is performed.

According to a fifteenth aspect, an embodiment of this application further provides a chip system, including a processor, configured to perform any implementation in the first aspect to the sixth aspect.

According to a sixteenth aspect, an embodiment of this application provides a communication system, including a network slice management network element and a management device that is configured to perform any method in the first aspect. The network slice management network element is configured to send a first request message to the management device, where the first request message includes identification information of a terminal device, identification information of a network slice, and first indication information, the first indication information indicates a registration type of the terminal device, and the first request message is used to request to grant access of the terminal device to the network slice.

According to a seventeenth aspect, an embodiment of this application provides a communication system, including a first network slice management network element and a management device that is configured to perform any method in the second aspect. The first network slice management network element is configured to send a first request message to the management device, and the first request message is used to request to grant access of a terminal device to a network slice.

According to an eighteenth aspect, an embodiment of this application provides a communication system, including at least one network slice management network element and a management device that is configured to perform any method in the third aspect. The at least one network slice management network element is configured to: receive a first request message from the management device, where the first request message is used to request for or subscribe to reclamation of a quota of registrable terminal devices in a network slice managed by the at least one network slice management network element; and send a reclaimable quota to the management device.

According to a nineteenth aspect, an embodiment of this application provides a communication system, including a network slice management network element configured to perform any method in the fifth aspect and a management device configured to perform any method in the fourth aspect.

According to a twentieth aspect, an embodiment of this application provides a communication system, including a first network element and a network slice management network element that is configured to perform any method in the sixth aspect. The first network element is configured to send a first request message to the network slice management network element, where the first request message includes identification information of a terminal device, identification information of a network slice, and first indication information, the first indication information indicates that the terminal device is subject to service continuity, and the first request message is used to request to grant access of the terminal device to the network slice.

### BRIEF DESCRIPTION OF DRAWINGS

FIG. 1 is a diagram of a 5G network architecture based on a service-oriented architecture;
FIG. 2 is an example diagram of network slice management according to an embodiment of this application;
FIG. 3 is a schematic flowchart of a network slice management method according to an embodiment of this application;
FIG. 4(a) is an example diagram of how a UE requests to register with a network slice according to an embodiment of this application;
FIG. 4(b) is an example diagram of how a UE requests to register with a network slice according to an embodiment of this application;
FIG. 4(c) is an example diagram of how a UE requests to register with a network slice according to an embodiment of this application;
FIG. 5 is an example diagram of network slice management according to an embodiment of this application;
FIG. 6 is a schematic flowchart of a network slice management method according to an embodiment of this application;
FIG. 7 is a schematic flowchart of a network slice management method according to an embodiment of this application;
FIG. 8 is a schematic flowchart of a network slice management method according to an embodiment of this application;
FIG. 9 is a schematic flowchart of a network slice management method according to an embodiment of this application;
FIG. 10 is a schematic flowchart of a network slice management method according to an embodiment of this application;
FIG. 11 is a schematic flowchart of a network slice management method according to an embodiment of this application;
FIG. 12 is a diagram of a communication apparatus according to an embodiment of this application; and
FIG. 13 is a diagram of a communication apparatus according to an embodiment of this application.

### DESCRIPTION OF EMBODIMENTS

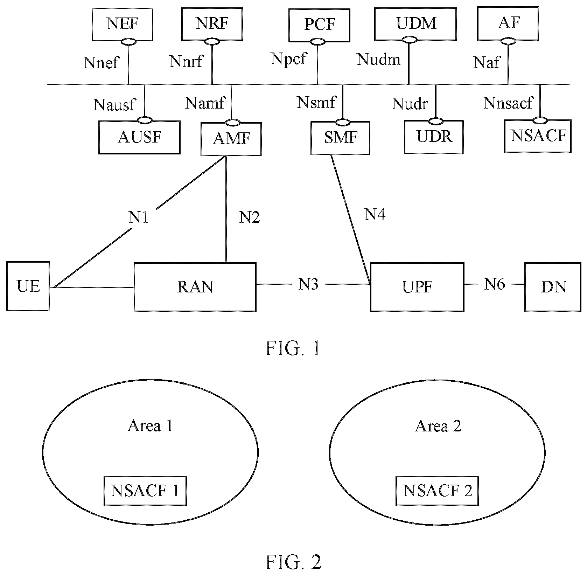

FIG. 1 is a diagram of a 5G network architecture based on a service-oriented architecture. The 5G network architecture shown in FIG. 1 may include an access network and a core network. A terminal device accesses a data network (data network, DN) through the access network and the core network.

The terminal device may be a user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, telemedicine, intelligent power grid, smart furniture, smart office, smart wearables, intelligent transportation, and smart cities. The terminal device may be a mobile phone, a tablet computer, a computer with a wireless transceiver function, a wearable device, a vehicle, an urban air vehicle (for example, an uncrewed aerial vehicle or a helicopter), a ship, a robot, a robot arm, a smart home device, or the like. The following uses a UE as an example of the terminal device for description. The UE that appears hereinafter may also be replaced with the terminal device or another example of the terminal device.

The access network is used to implement an access-related function, may provide a network access function for an authorized user in a specific area, and can determine transmission links of different quality based on a user level, a service requirement, and the like, to transmit user data. The access network forwards a control signal and the user data between the UE and the core network. The access network may include an access network device. The access network device may be a device that provides access for the UE, and may include a radio access network (radio access network, RAN) device and a wireline access network device. The RAN device is mainly responsible for radio resource management, quality of service (quality of service, QoS) management, data compression and encryption on an air interface side, and other functions. The RAN device may include base stations in various forms, for example, a macro base station, a micro base station (which may also be referred to as a small cell), a relay station, an access point, and a balloon station. In systems using different radio access technologies, devices having a base station function may have different names. For example, in a 5G system, the device is referred to as a RAN or a next-generation node base station (next-generation Node base station, gNB). In a long term evolution (long term evolution, LTE) system, the device is referred to as an evolved NodeB (evolved NodeB, eNB or eNodeB).

The access network device and the UE may be at a fixed position, or may be movable. The access network device and the UE each may be deployed on land, indoor or outdoor, or may be handheld or vehicle-mounted; or may be deployed on the water; or may be deployed on an airplane, a balloon, or a satellite in the air. An application scenario of the access network device and the UE is not limited in embodiments of this application.

The core network is responsible for maintaining subscription data of a mobile network, and providing session management, mobility management, policy management, security authentication, and other functions for the UE. The core network includes but is not limited to one or more of the following network elements: an application function (application function, AF) network element, a unified data management (unified data management, UDM) network element, a unified data repository (unified data repository, UDR) network element, a policy control function (policy control function, PCF) network element, a session management function (session management function, SMF) network element, an access and mobility management function (access and mobility management function, AMF) network element, a network repository function (network repository function, NRF) network element, an authentication server function (authentication server function, AUSF) network element, a network exposure function (network exposure function, NEF) network element, a user plane function (user plane function, UPF) network element, and a network slice admission control function (network slice admission control function, NSACF) network element.

The AMF network element is mainly responsible for mobility management in a mobile network, for example, user location update, user network registration, user handover, and the like.

The SMF network element is mainly responsible for session management in a mobile network, for example, session establishment, modification, and release. A specific function is, for example, allocating an internet protocol (internet protocol, IP) address to a user, or selecting a UPF that provides a packet forwarding function.

The UPF network element is mainly responsible for forwarding and receiving user data, and may receive the user data from a data network, and transmit the user data to the UE via the access network device; or may receive the user data from the UE via the access network device, and forward the user data to a data network.

The UDM network element includes functions such as subscription data management and user access authorization, and the like.

The UDR network element includes functions such as storage and retrieval of subscription data, policy data, application data, and other types of data.

The NEF network element is mainly configured to support exposure of capabilities and events.

The AF network element transfers a requirement of an application side on a network side, for example, a QoS requirement or user status event subscription. The AF may be a thirdparty functional entity, or may be an operator-deployed application service, for example, an IP multimedia subsystem (IP Multimedia Subsystem, IMS) voice call service.

The PCF network element mainly supports providing a unified policy framework to govern network behavior, and providing policy rules to a control plane network function, and is responsible for accessing user subscription information relevant for policy decisions. The PCF network element may provide a policy, for example, a QoS policy or a slice selection policy, to the AMF network element and the SMF network element.

The NRF network element may be configured to provide a network element discovery function, and provide, based on a request of another network element, network element information corresponding to a network element type. The NRF further provides network element management services, such as network element registration, update, and deregistration, network element status subscription and push, and the like.

The AUSF network element is responsible for authenticating the UE and checking validity of the UE.

The NSACF network element is responsible for network slice management, for example, may control a quantity of registered users per network slice, and a quantity of established protocol data unit (protocol data unit, PDU) sessions per network slice.

ADN, in which a plurality of types of services may be deployed, may provide a service, for example, a data and/or voice service, for the UE. For example, the DN is a private network of an intelligent factory, a sensor mounted in a workshop of the intelligent factory may be the UE, a control server of the sensor is deployed in the DN, and the control server may provide a service for the sensor. The sensor may communicate with the control server, to obtain instructions of the control server, transmit collected sensor data to the control server according to the instructions, and so on. For another example, the DN is an internal office network of a company, a mobile phone or a computer of an employee in the company may be the UE, and the mobile phone or the computer of the employee can access information, a data resource, or the like in the internal office network of the company.

The AF network element, the UDM network element, the UDR network element, the PCF network element, the SMF network element, the AMF network element, the NRF network element, the AUSF network element, the NEF network element, and the UPF network element may also be respectively referred to as the AF, UDM, UDR, PCF, SMF, AMF, NRF, AUSF, NEF, and UPF for short.

Nausf, Nnef, Nnrf, Namf, Npcf, Nsmf, Nudm, Nudr, Naf, and Nnsacf in FIG. 1 are service-based interfaces provided by the AUSF, NEF, NRF, AMF, PCF, SMF, UDM, UDR, AF, and NSACF respectively, and are configured to invoke corresponding service-based operations. N1, N2, N3, N4, and N6 are interface serial numbers. Meanings of these interface serial numbers are as follows:
(1) N1 represents an interface between the AMF and the UE, and may be configured to transfer non-access stratum (non-access stratum, NAS) signaling (for example, including a QoS rule from the AMF) to the UE, and the like.
(2) N2 represents an interface between the AMF and the access network device, and may be configured to transfer radio bearer control information from a core network side to the access network device, and the like.
(3) N3 represents an interface between the access network device and the UPF, and is mainly configured to transfer uplink and downlink user plane data between the access network device and the UPF.
(4) N4 represents an interface between the SMF and the UPF, and may be configured to transfer information between a control plane and a user plane, including delivery of a forwarding rule, a QoS rule, a traffic statistics rule, and the like from the control plane to the user plane, and reporting of user plane information.
(5) N6 represents an interface between the UPF and the DN, and is configured to transfer uplink and downlink user data flows between the UPF and the DN.

It may be understood that these network elements or functions may be network elements in a hardware device, may be software functions running on dedicated hardware, or may be virtualized functions instantiated on a platform (for example, a cloud platform). As a possible implementation, the network elements or the functions may be implemented by one device, may be jointly implemented by a plurality of devices, or may be one functional module in one device. This is not specifically limited in embodiments of this application.

The network slice management network element in embodiments of this application may be the NSACF network element in a 5G system, or may be a network element having a function of the foregoing NSACF network element in a future communication network, for example, a 6G network. This is not limited in this application. In embodiments of this application, the NSACF network element is used as an example of the network slice management network element for description. In addition, the NSACF network element is referred to as NSACF for short.

In embodiments of this application, a user quantity quota of a network slice may be divided between different areas, and each area manages a part of the quota for the network slice. Then, a network slice management network element in the area manages the part of the quota for the network slice in the area, for example, determines, based on a remaining quota (also referred to as a quantity of remaining registrable terminal devices) for the network slice in the area, whether to accept a request of a new terminal device for registering with the network slice, or when a registered terminal device in the network slice deregisters, deletes information about the terminal device and modifies a remaining quota of the network slice in the area. The following provides descriptions with reference to an example in FIG. 2.

FIG. 2 is an example diagram of network slice management according to an embodiment of this application. For example, a company applies for a network slice 1 to an operator, and the network slice 1 is used to provide a network service for members of an application program (APP) of the company in an area 1 and an area 2. It is assumed that a maximum user quantity for the network slice 1 is 10,000, a maximum user quantity for the network slice 1 in the area 1 is 6000, and a maximum user quantity for the network slice 1 in the area 2 is 4000. An NSACF 1 is deployed in the area 1, and the NSACF 1 may manage a user quantity for the network slice 1 in the area 1. Specifically, the NSACF 1 manages a quantity of actually registered UEs and/or a quantity of remaining registrable UEs in the network slice 1 in the area 1. For example, the NSACF 1 records that in the network slice 1 in the area 1, the quantity of actually registered UEs is 4000, and the quantity of remaining registrable UEs is 2000. An NSACF 2 is deployed in the area 2, and the NSACF 2 may manage a user quantity for the network slice 1 in the area 2. Specifically, the NSACF 2 manages a quantity of actually registered UEs and/or a quantity of remaining registrable UEs in the network slice 1 in the area 2. For example, the NSACF 2 records that in the network slice 1 in the area 2, the quantity of actually registered UEs is 3000, and the quantity of remaining registrable UEs is 1000.

A quantity of actually registered UEs in a network slice managed by the NSACF 1 and the NSACF 2 dynamically changes. The following provides descriptions with reference to the accompanying drawings.

In embodiments of this application, a maximum user quantity for a network slice managed by an NSACF is also referred to as a user quantity quota for the network slice managed by the NSACF, or a quota of registrable terminal devices in the network slice managed by the NSACF, or a maximum quantity of terminal devices in the network slice managed by the NSACF. These descriptions have a same meaning, and details are not described again below.

In embodiments of this application, a quantity of remaining registrable users in the network slice managed by the NSACF is also referred to as a remaining quota of the network slice managed by the NSACF, or is referred to as a quantity of remaining registrable terminal devices in the network slice managed by the NSACF. These descriptions have a same meaning, and details are not described again below.

In embodiments of this application, a quantity of actually registered users in the network slice managed by the NSACF is also referred to as a quantity of actually registered terminal devices in the network slice managed by the NSACF. These descriptions have a same meaning, and details are not described again below.

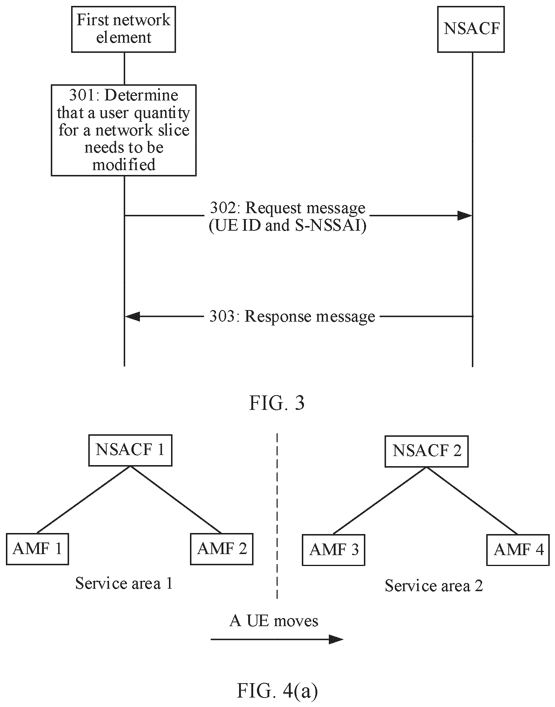

FIG. 3 is a schematic flowchart of a network slice management method according to an embodiment of this application. The method includes the following steps.

Step 301: A first network element determines that a user quantity for a network slice needs to be modified.

For example, if a UE needs to use the network slice, the first network element determines that the user quantity for the network slice needs to be modified. Specifically, a quantity of actually registered users in the network slice needs to be increased. For another example, if a UE deregisters from the network slice, the first network element determines that the user quantity for the network slice needs to be modified. Specifically, a quantity of actually registered users in the network slice needs to be decreased, and a quantity of remaining registrable users needs to be increased.

In an implementation, if the UE registers with a 4th generation (4th generation, 4G) network, the first network element may be a network element that integrates a function of an SMF network element and a function of a packet data network gateway-user plane (packet data network gateway-control plane, PGW-C). After the UE registers with the 4G network and establishes a packet data network (packet data network, PDN) connection, the PDN connection is associated with a network slice, and the first network element may determine the network slice associated with the PDN, to determine that a quantity of actually registered users in the network slice needs to be increased. If all PDN connections of the UE in the network slice have deregistered, the first network element determines that the quantity of actually registered users in the network slice needs to be decreased.

In another implementation, when the UE sends a registration request message to an AMF, to request to register with a 5G network via the AMF, the registration request message includes information such as S-NSSAI. A network slice identified by the S-NSSAI is a network slice with which the UE needs to register. The AMF determines, based on the S-NSSAI in the registration request message, that a user quantity for the network slice identified by the S-NSSAI needs to be modified. Specifically, the AMF determines that a quantity of actually registered users in the network slice needs to be increased. For another example, if the AMF determines that a registered UE in a network slice needs to deregister from a network, the AMF determines that a user quantity for the network slice in which the UE is located needs to be modified. Specifically, a quantity of actually registered users in the network slice needs to be decreased.

Step 302: The first network element sends a request message to an NSACF. Correspondingly, the NSACF receives the request message.

The NSACF is an NSACF related to the first network element, and is specifically an NSACF deployed in a same area as the first network element. The NSACF can communicate with the first network element.

In an implementation, if a UE registers with a 4G network, when the UE is located in a roaming area and establishes a local breakout (local breakout) packet data network connection, and the first network element is located in a home area of the UE, the NSACF is an NSACF in the home area of the UE. For another example, when the UE is located in a home area and establishes a packet data network connection, and the first network element is located in the home area of the UE, the NSACF is an NSACF in the home area of the UE.

In another implementation, if a UE registers with a 5G network, when the UE is located in a roaming area, and the first network element is located in the roaming area of the UE, the NSACF is an NSACF in the roaming area of the UE. For another example, when the UE is located in a home area, and the first network element is located in the home area of the UE, the NSACF is an NSACF in the home area of the UE.

The request message includes one or more of the following: a UE ID, S-NSSAI, an NF ID, a modification type, or an access type. The UE ID is identification information of a UE, the NF ID is identification information of the first network element, the S-NSSAI is identification information of a network slice accessed by the UE, the modification type is increase or decrease, and the access type is 3GPP access or non-3GPP access.

The request message is used to request to manage a user quantity for the network slice identified by the S-NSSAI.

The request message is also referred to as a user quantity check request message, or may have another name. This is not limited in this application.

Step 303: The NSACF sends a response message to the first network element. Correspondingly, the first network element receives the response message.

When the modification type is increase, and a quantity of remaining registrable UEs in the network slice managed by the NSACF is greater than 0, it indicates that there is a remaining user quantity quota for the network slice. Therefore, the response message includes indication information indicating to grant access to the network slice, and the indication information is also referred to as granting indication information. The NSACF increases the quantity of actually registered users in the network slice by 1, and/or decreases the quantity of remaining registrable users in the network slice by 1. In addition, the NSACF further records information such as the UE ID and the NF ID.

When the modification type is increase, and a quantity of remaining registrable UEs in the network slice managed by the NSACF is equal to 0, it indicates that there is no remaining user quantity quota for the network slice. Therefore, the response message includes indication information indicating to reject access to the network slice, and the indication information is also referred to as denial indication information.

When the modification type is decrease, the NSACF decreases the quantity of actually registered users in the network slice by 1, and/or increases the quantity of remaining registrable users in the network slice by 1. Optionally, the response message includes indication information indicating that the modification is successful.

In the foregoing solution, corresponding user quantity quotas are preconfigured on NSACFs for a same network slice in a plurality of different areas, and the plurality of NSACFs dynamically manage quantities of actually registered UEs, so that the same network slice can be used in the plurality of areas, thereby helping improve an application scope and service experience of the network slice.

If the UE is granted permission by the NSACF to use the network slice, the UE may access a network through the network slice. However, because the UE moves across service areas, or a radio access technology (radio access technology, RAT) of the UE changes, or the UE roams, the UE needs to re-register, that is, perform registration update, and re-register with the previous network slice, in other words, the network slice with which the UE registers does not change. If a user quantity quota for the network slice with which the UE re-registers is managed by another NSACF, and the user quantity quota for the network slice managed by the NSACF is already allocated, the NSACF denies the UE registration with the network slice. Consequently, the UE fails to register with the network slice, a service on the UE is interrupted, and service continuity of the UE cannot be ensured.

The following provides descriptions with reference to different scenarios.

### Scenario 1: The UE moves across service areas.

When the UE moves from one service area to another service area, and a same network slice is managed by different NSACFs in the two different service areas, the UE may be denied registration with the network slice after moving to the another service area.

FIG. 4(a) is an example diagram of how a UE requests to register with a network slice according to an embodiment of this application. In this example, an NSACF 1 is deployed in a service area 1, the NSACF 1 manages a part of a user quantity quota of a network slice 1, and both an AMF 1 and an AMF 2 in the service area 1 correspond to the NSACF 1. An NSACF 2 is deployed in a service area 2, the NSACF 2 also manages a part of the user quantity quota for the network slice 1, and both an AMF 3 and an AMF 4 in the service area 2 correspond to the NSACF 2.

Before moving, the UE is located in the service area 1, and registers with the network slice 1 in the service area 1 via the AMF 2. In a process in which the UE registers with the network slice 1, the NSACF 1 determines that there is a remaining user quantity quota for the network slice 1 managed by the NSACF 1, and therefore grants a UE 1 permission to register with the network slice 1.

The UE subsequently moves to the service area 2, and needs to re-register with the network slice 1 in the service area 2 via the AMF 3. In this case, the AMF 3 may request, through the process shown in FIG. 3, the NSACF 2 to grant permission to use the network slice 1. If there is a remaining user quantity quota for the network slice 1 managed by the NSACF 2, the NSACF 2 grants the UE permission to register with the network slice 1 via the AMF 3. If there is no remaining user quantity quota for the network slice 1 managed by the NSACF 2, the NSACF 2 denies the UE registration with the network slice 1 via the AMF 3.

It can be learned that, when the UE moves between different service areas, the UE may fail to register with the previous network slice after moving to another service area, and service continuity of the UE cannot be ensured.

It should be noted that a service continuity problem generally does not occur if the UE is in a same service area. FIG. 4(a) is used as an example. The UE moves in the service area 1. Before moving, the UE requests to register with the network slice 1 via the AMF 1. The NSACF 1 determines that there is a remaining user quantity quota for the network slice 1 managed by the NSACF 1, and therefore grants the UE 1 permission to register with the network slice 1. After moving, the UE requests to re-register with the network slice 1 via the AMF 2. In this case, it is still the NSACF 1 that determines whether to grant the UE 1 permission to register with the network slice 1. When the UE previously registers with the network slice 1 via the AMF 1, the NSACF 1 has granted permission and recorded a UE ID. After the UE moves subsequently, the UE requests to register with the network slice 1 again via the AMF 2. After receiving a request message similar to step 302 in FIG. 3 from the AMF 2, the NSACF 1 finds that the permission has been granted to the UE. Therefore, the NSACF 1 may directly grant access of the UE to the network slice 1. In addition, the NSACF 1 does not need to modify a quantity of actually registered UEs in the network slice 1. This is because the UE deregisters from the network slice 1 via the AMF 1 and registers with the network slice 1 via the AMF 2. Therefore, the quantity of actually registered UEs in the network slice 1 does not increase or decrease.

### Scenario 2: A radio access technology of the UE changes.

When the radio access technology of the UE changes, and the UE accesses a network slice, an NSACF that manages a user quantity quota for the network slice may change. Consequently, after the radio access technology of the UE changes, the UE may be denied registration with the network slice.

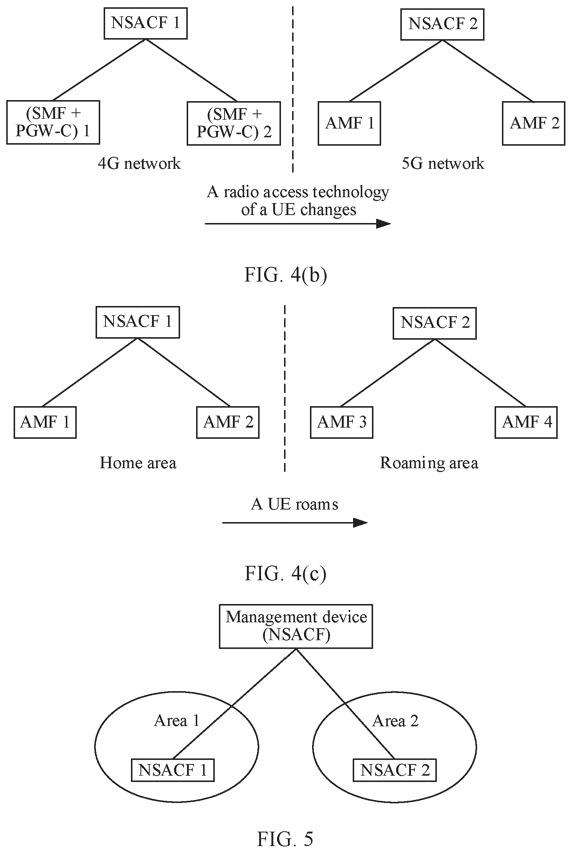

FIG. 4(b) is an example diagram of how a UE requests to register with a network slice according to an embodiment of this application. In this example, an NSACF 1 is deployed in an area 1, the NSACF 1 manages a part of a user quantity quota of a network slice 1, and both an (SMF + PGW-C) 1 and an (SMF + PGW-C) 2 in the area 1 correspond to the NSACF 1. An NSACF 2 is deployed in an area 2, the NSACF 2 also manages a part of the user quantity quota for the network slice 1, and both an AMF 1 and an AMF 2 in the service area 2 correspond to the NSACF 2. An (SMF + PGW-C) represents a network element that has a function of an SMF and a function of a PGW-C.

The NSACF 1, the (SMF + PGW-C) 1, and the (SMF + PGW-C) 2 are deployed in a same area, in other words, a user establishes a home routed (Home Routed) packet data network connection. For example, the NSACF 1, the (SMF + PGW-C) 1, and the (SMF + PGW-C) 2 are all deployed in a home area of the UE. The NSACF 2, the AMF 1, and the AMF 2 are deployed in a same area, for example, are all deployed in a roaming area (that is, a visited location) of the UE.

The UE accesses the network slice 1 in a 4G network via the (SMF + PGW-C) 1. In a process in which the UE registers with the network slice 1, the NSACF 1 determines that there is a remaining user quantity quota for the network slice 1 managed by the NSACF 1, and therefore grants a UE 1 permission to register with the network slice 1.

When the UE is subsequently handed over to a 5G network, the UE needs to re-register with the network slice 1 via the AMF 1. In this case, the AMF 1 may request, through the process shown in FIG. 3, the NSACF 2 to grant permission to use the network slice 1. If there is a remaining user quantity quota for the network slice 1 managed by the NSACF 2, the NSACF 2 grants the UE permission to register with the network slice 1 via the AMF 1. If there is no remaining user quantity quota for the network slice 1 managed by the NSACF 2, the NSACF 2 denies the UE registration with the network slice 1 via the AMF 1.

It can be learned that after the radio access technology of the UE changes, the UE may fail to register with the previous network slice by using a switched radio access technology, and service continuity of the UE cannot be ensured.

### Scenario 3: The UE roams.

When the UE roams and a network slice is managed by different NSACFs in a home area and a roaming area, after roaming, the UE may be denied registration with the network slice.

FIG. 4(c) is an example diagram of how a UE requests to register with a network slice according to an embodiment of this application. In this example, an NSACF 1 is deployed in the home area of the UE, the NSACF 1 manages a part of a user quantity quota of a network slice 1, and both an AMF 1 and an AMF 2 in the home area correspond to the NSACF 1. An NSACF 2 is deployed in the roaming area of the UE, the NSACF 2 also manages a part of the user quantity quota for the network slice 1, and both an AMF 3 and an AMF 4 in the roaming area correspond to the NSACF 2.

Before roaming, the UE registers with the network slice 1 via the AMF 2 in the home area. In a process in which the UE registers with the network slice 1, the NSACF 1 determines that there is a remaining user quantity quota for the network slice 1 managed by the NSACF 1, and therefore grants a UE 1 permission to register with the network slice 1.

When the UE roams subsequently, the UE needs to re-register with the network slice 1 via the AMF 3 in the roaming area. In this case, the AMF 3 may request, through the process shown in FIG. 3, the NSACF 2 to grant permission to use the network slice 1. If there is a remaining user quantity quota for the network slice 1 managed by the NSACF 2, the NSACF 2 grants the UE permission to register with the network slice 1 via the AMF 3. If there is no remaining user quantity quota for the network slice 1 managed by the NSACF 2, the NSACF 2 denies the UE registration with the network slice 1 via the AMF 3.

It can be learned that, when the UE roams, the UE may fail to re-register with the previous network slice after roaming, and service continuity of the UE cannot be ensured.

To resolve the foregoing service continuity problem of the UE, an embodiment of this application provides a corresponding solution. A main idea of the solution is to add a management device, where the management device is also an NSACF. The NSACF may be referred to as a manager NSACF (manager NSACF), a primary NSACF (primary NSACF), or the like. The management device is configured to manage a plurality of NSACFs, and dynamically adjust user quantity quotas on the plurality of NSACFs, to ensure as much as possible that the user quantity quotas on the NSACFs are not exhausted. This helps ensure that a request for using a network slice by the UE is successfully granted, thereby ensuring the service continuity of the UE.

The following provides descriptions with reference to an example. An example in FIG. 2 is used as an example. After a management device is added based on the example in FIG. 2, an example shown in FIG. 5 is obtained. FIG. 5 is an example diagram of network slice management according to an embodiment of this application. The management device may be deployed in a same area as an NSACF 1, or may be deployed in a same area as an NSACF 2, or may be deployed in another area. This is not limited in this application. In this example, the added management device can dynamically adjust user quantity quotas on the NSACF 1 and NSACF 2. In addition, the management device can also be used as a common NSACF to manage a part of a user quantity quota of a network slice 1. For example, a total user quantity quota for the network slice 1 is 10,000, a user quantity quota for the network slice 1 configured on the management device is 3000, a user quantity quota for the network slice 1 configured on the NSACF 1 is 3000, and a user quantity quota for the network slice 1 configured on the NSACF 2 is 4000. In addition, the management device can dynamically adjust user quantity quotas on the management device, the NSACF 1, and the NSACF 2. For example, when the user quantity quota for the network slice 1 on the NSACF 1 is already allocated, the management device may allocate a part of the user quantity quota of the management device to the NSACF 1.

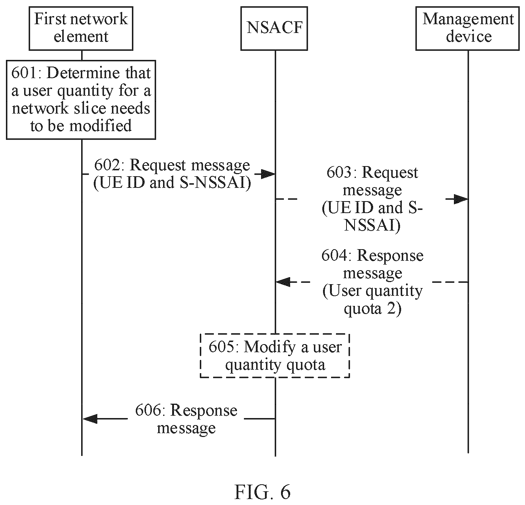

After the management device is added, user quantity quotas of a plurality of NSACFs managed by the management device can be dynamically adjusted, thereby ensuring service continuity of a UE. The following describes a dynamic adjustment process with reference to FIG. 6.

FIG. 6 is a schematic flowchart of a network slice management method according to an embodiment of this application. The method includes the following steps.

Step 601: A first network element determines that a user quantity for a network slice needs to be modified.

Step 602: The first network element sends a request message to an NSACF. Correspondingly, the NSACF receives the request message.

Step 601 and step 602 are the same as step 301 and step 302 in the embodiment of FIG. 3. Refer to the foregoing descriptions.

In a case, after the NSACF receives the request message, if a modification type carried in the request message is decrease, and the NSACF determines that a UE ID in the request message is stored in the NSACF, the NSACF decreases a quantity of actually registered users in the network slice by 1, and/or increases a quantity of remaining registrable users in the network slice by 1. Optionally, a response message in step 606 may carry indication information indicating that the modification is successful. In this case, the following step 603 to step 605 do not need to be performed.

In another case, after the NSACF receives the request message, if a modification type carried in the request message is decrease, and the NSACF determines that a UE ID in the request message is not stored in the NSACF, the following step 603, step 604, and step 606 need to be performed. A management device determines whether the UE ID is stored. If the UE ID is stored, the management device decreases a quantity of actually registered users in the network slice on the management device by 1, and/or increases a quantity of remaining registrable users in the network slice by 1.

In another case, after the NSACF receives the request message, if a modification type carried in the request message is increase, and the NSACF determines that a UE ID in the request message is not stored in the NSACF, it indicates that the UE is a newly registered UE, in other words, the NSACF has not previously granted the UE permission to use the network slice, where the network slice is a network slice identified by S-NSSAI in the request message. If there is a remaining user quantity quota on the NSACF, the NSACF grants the UE permission to use the network slice. Specifically, a response message in step 606 carries indication information indicating to grant access to the network slice. In this case, the following step 603 to step 605 do not need to be performed. If there is no remaining user quantity quota on the NSACF, the NSACF cannot directly grant the UE permission to use the network slice. In this case, the following step 603 to step 605 may be performed to increase a user quantity quota for the NSACF, so that after the user quantity quota is increased, the NSACF grants, by performing step 606, the UE permission to use the network slice.

Step 603: The NSACF sends a request message to the management device. Correspondingly, the management device receives the request message.

In an implementation, if the modification type in the request message in step 602 is decrease, and the UE ID in the request message in step 602 is not stored in the NSACF, it indicates that previously, the NSACF does not grant the UE permission to use the network slice. Therefore, the NSACF sends the request message to the management device, where the request message includes the UE ID, an NF ID, the S-NSSAI, and the modification type, and the modification type is decrease. The UE ID, the NF ID, the S-NSSAI, and the modification type are from the request message in step 602.

In another implementation, if the modification type in the request message in step 602 is increase, and the user quantity quota for the network slice managed by the NSACF is already allocated, the NSACF sends the request message to the management device, where the request message includes the UE ID, an NF ID, the S-NSSAI, and the modification type, and the modification type is increase. Optionally, the request message further includes a user quantity quota 1 on the NSACF. The UE ID, the NF ID, the S-NSSAI, and the modification type are from the request message in step 602. The user quantity quota 1 is a maximum user quantity for the network slice managed by the NSACF, and the user quantity quota 1 is already allocated. In other words, the NSACF currently can no longer receive a request of a new UE for registering with the network slice. If the request message carries the user quantity quota 1, when increasing a quota for the NSACF, the management device may refer to the user quantity quota 1, in other words, determine, based on the user quantity quota 1 that is already allocated by the NSACF, how many new users are allocated to the quota for the NSACF.

It should be noted that the NSACF determines the management device based on the S-NSSAI, in other words, determines the management device corresponding to the S-NSSAI.

Step 604: The management device sends a response message to the NSACF. Correspondingly, the NSACF receives the response message.

In an implementation, if the modification type in the request message in step 603 is decrease, the management device determines whether the UE ID in the request message is stored in the management device. If the management device stores the UE ID, the management device deletes the UE ID, decreases the quantity of actually registered users in the network slice on the management device by 1, and/or increases the quantity of remaining registrable users in the network slice by 1. Optionally, the response message in step 604 carries indication information indicating that the modification is successful.

In another implementation, if the modification type in the request message in step 603 is increase, the management device may have the following two processing manners:
Manner 1: The management device determines to increase the user quantity quota for the network slice for the NSACF. The management device allocates x users from the user quantity quota for the network slice of the management device to the NSACF. The management device decreases the user quantity quota for the network slice of the management device by x, and then includes a user quantity quota 2 in the response message in step 604, where the user quantity quota 2 = the user quantity quota 1 + x. x is a positive integer.
Manner 2: The management device determines not to increase the user quantity quota for the network slice for the NSACF, but directly grants the UE permission to use the network slice and manages the UE ID of the UE. The management device determines that there is a remaining user quantity quota for the network slice managed by the management device, in other words, a quantity of remaining registrable UEs in the network slice is greater than 0. Therefore, the management device includes, in the response message in step 604, indication information indicating to grant access to the network slice, where the indication information is also referred to as granting indication information. The management device increases the quantity of actually registered users in the network slice by 1, and/or decreases the quantity of remaining registrable users in the network slice by 1. In addition, the management device further records the UE ID and the NF ID.

Step 605: The NSACF modifies the user quantity quota.

This step is an optional step.

Step 606: The NSACF sends a response message to the first network element. Correspondingly, the first network element receives the response message.

When the modification type in the request message in step 602 is decrease, the response message in step 606 carries indication information indicating that the modification is successful. In addition, step 605 does not need to be performed.

When the modification type in the request message in step 602 is increase, if the response message in step 604 carries the user quantity quota 2, step 605 needs to be performed. Specifically, the NSACF changes the user quantity quota for the network slice managed by the NSACF from the user quantity quota 1 to the user quantity quota 2. Then, the NSACF grants the UE permission to use the network slice and manages the UE ID of the UE. Specifically, the NSACF includes, in the response message in step 606, indication information indicating to grant access to the network slice, where the indication information is also referred to as granting indication information. The NSACF increases the quantity of actually registered users in the network slice by 1, and/or decreases the quantity of remaining registrable users in the network slice by 1. In addition, the management device further records information such as the UE ID and the NF ID.

When the modification type in the request message in step 602 is increase, if the response message in step 604 carries the indication information indicating to grant access to the network slice, it indicates that the management device grants the UE permission to use the network slice. Therefore, the response message in step 606 carries the indication information indicating to grant access to the network slice. In addition, step 605 does not need to be performed.

In the foregoing solution, when the NSACF receives a request for granting the UE permission to use a network slice, if a user quantity quota for the network slice managed by the NSACF is already allocated, the NSACF may request the management device to determine to increase the user quantity quota for the NSACF, or the management device directly grants the UE permission to use the network slice and manages information about the UE. This helps ensure that the request for using the network slice by the UE is successfully granted, to avoid service interruption of the UE, thereby ensuring service continuity of the UE.

In the foregoing embodiment of FIG. 6, a service continuity problem of the UE can be basically resolved. However, this application further provides a solution, to further resolve the service continuity problem in some extreme scenarios. FIG. 5 is used as an example. The NSACF 1 grants the UE permission to use the network slice 1 currently accessed by the UE, and manages information such as a UE ID of the UE. Because the UE moves across service areas, a radio access technology of the UE changes, or the UE roams, the NSACF 2 needs to re-grant the UE permission to use the network slice 1. If the user quantity quota for the network slice 1 managed by the NSACF 2 is already allocated, and the user quantity quota for the network slice 1 managed by the management device is also allocated, service continuity of the UE can be ensured by using the methods in FIG. 7 to FIG. 11.

Therefore, this application provides corresponding solutions, and the following specifically describes the solution.

FIG. 7 is a schematic flowchart of a network slice management method according to an embodiment of this application. The method includes the following steps.

Step 701: A first network element determines that a user quantity for a network slice needs to be modified.

Step 701 is the same as step 301 in the embodiment of FIG. 3. For details, refer to the foregoing descriptions.

It should be noted that the embodiment of FIG. 7 is for a scenario in which a user quantity for a network slice needs to be increased. Therefore, the first network element determines that the user quantity for the network slice needs to be increased.

Step 702: The first network element sends a request message to an NSACF. Correspondingly, the NSACF receives the request message.

The NSACF is an NSACF related to the first network element, and is specifically an NSACF deployed in a same area as the first network element. The NSACF can communicate with the first network element.

In an implementation, if a UE registers with a 4G network, when the UE is located in a roaming area and establishes a local breakout packet data network connection, and the first network element is located in a home area of the UE, the NSACF is an NSACF in the home area of the UE. For another example, when the UE is located in a home area, and the first network element is located in the home area of the UE and establishes a packet data network connection, the NSACF is an NSACF in the home area of the UE.

In another implementation, if a UE registers with a 5G network, when the UE is located in a roaming area, and the first network element is located in the roaming area of the UE, the NSACF is an NSACF in the roaming area of the UE. For another example, when the UE is located in a home area, and the first network element is located in the home area of the UE, the NSACF is an NSACF in the home area of the UE.

The request message includes one or more of the following: a UE ID, S-NSSAI, indication information, an NF ID, a modification type, or an access type.

The UE ID is identification information of the UE, the S-NSSAI is identification information of the network slice accessed by the UE, the NF ID is identification information of the first network element, the modification type is increase, the access type is 3GPP access or non-3GPP access, and the indication information indicates that the UE is subject to service continuity, or indicates that the modification type is a modification type that the UE is subject to service continuity.

The request message is used to request to grant access of the UE to the network slice, or is used to request to manage the check of user quantity of the network slice identified by the S-NSSAI.

The request message is also referred to as a user quantity check request message, or may have another name. This is not limited in this application.

Step 703: The NSACF sends the request message to a management device based on the indication information. Correspondingly, the management device receives the request message.

After receiving the request message from the first network element, the NSACF determines that the indication information is received. In this case, the NSACF determines to forward the request message received from the first network element to the management device.

In other words, in this embodiment, if the NSACF finds that the UE is a UE that is subject to service continuity, the NSACF does not process a request for granting access of the UE to the network slice, but forwards the request message to the management device for processing. Therefore, even if a remaining quota (that is, a quantity of remaining registrable UEs) of the network slice managed by the NSACF is greater than 0, the NSACF does not allocate the UE.

It should be noted that the NSACF determines the management device based on the S-NSSAI, in other words, determines the management device corresponding to the S-NSSAI.

Step 704: The management device sends a response message to the NSACF. Correspondingly, the NSACF receives the response message.

The management device is an NSACF that may be configured to manage a UE having a service continuity requirement.

When the modification type is increase and a quantity of remaining registrable UEs in the network slice managed by the management device is greater than 0, it indicates that there is a remaining user quantity quota for the network slice. In this case, the response message includes indication information indicating to grant access to the network slice, where the indication information is also referred to as granting indication information. The management device increases a quantity of actually registered users in the network slice managed by the management device by 1, and/or decreases a quantity of remaining registrable users in the network slice by 1. In addition, the management device further records information such as the UE ID and the NF ID. It should be noted that, if a plurality of UE IDs are carried in both step 702 and step 703, and the management device can grant permission to a plurality of UEs, the management device increases the quantity of actually registered users in the network slice managed by the management device by n, and/or decreases the quantity of remaining registrable users in the network slice by n, where n is a quantity of UEs to which the permission is granted.

Therefore, when a quantity of remaining registrable UEs in the network slice managed by the management device is equal to 0, it indicates that there is no remaining user quantity quota for the network slice. In this case, the response message includes indication information indicating to reject access to the network slice, where the indication information is also referred to as denial indication information.

Step 705: The NSACF sends the response message to the first network element. Correspondingly, the first network element receives the response message.

The response message includes indication information indicating to grant or reject access to the network slice.

Subsequently, if the UE moves across service areas, or a radio access technology of the UE changes, or the UE roams, the UE needs to re-register. In this case, a new NSACF also forwards a received request message from the first network element to the management device according to the processing method similar to that of the NSACF in the embodiment of FIG. 7. Because the management device stores the UE ID of the UE, the management device can directly grant the UE permission to use the network slice, and the management device does not need to modify the quantity of actually registered UEs and the quantity of remaining registrable UEs in the network slice managed by the management device. Therefore, the method can ensure the service continuity of the UE.

The following describes the embodiment of FIG. 7 with reference to an example in FIG. 5. When the UE previously requests to register with the network slice 1, a network element 1 (for example, an AMF) in the area 1 requests the NSACF 1 in the area 1 to grant the UE permission to use the network slice 1. After receiving the request message, the NSACF 1 forwards the request message to the management device based on the indication information in the request message or based on the modification type and the indication information in the request message. Then, the management device grants the UE permission to use the network slice 1, and the management device stores information such as the UE ID and the NF ID. Subsequently, because the UE moves across service areas, a radio access technology of the UE changes, or the UE roams, the UE needs to re-register with the network slice 1, and a network element 2 (for example, an AMF) in the area 2 requests the NSACF 2 in the area 2 to grant the UE permission to use the network slice 1. After receiving the request message, the NSACF 2 forwards the request message to the management device based on the indication information in the request message or based on the modification type and the indication information in the request message. The management device determines, based on the UE ID in the request message, that the UE has been previously granted permission by the management device to use the network slice 1. Therefore, the management device continues to grant the UE permission to use the network slice 1, and the management device does not need to modify a quantity of actually registered UEs and a quantity of remaining registrable UEs in the network slice 1 managed by the management device. Therefore, the method can ensure the service continuity of the UE.

In the foregoing solution, for the UE having the service continuity requirement, after receiving the request message used to request to grant the UE permission to use the network slice, the NSACF forwards the request message to the management device, and the management device grants the UE the permission to use the network slice and manages information about the UE. Therefore, when the UE moves across service areas, or a radio access technology of the UE changes, or the UE roams, a same NSACF (that is, the management device) grants the UE the permission to use the network slice. This can avoid user quantity quota insufficiency caused by a change of the NSACF, and therefore can ensure the service continuity of the UE.

FIG. 8 is a schematic flowchart of a network slice management method according to an embodiment of this application. The method includes the following steps.

Step 801: An NSACF manages information about one or more registered UEs.

Specifically, according to the method in the embodiment of FIG. 3, the NSACF grants a plurality of UEs permission to use a network slice, and the NSACF manages the information about the registered UEs, for example, records a UE ID, and may further record information such as an NF ID.

Then, the NSACF determines a UE having a service continuity requirement in the UEs managed by the NSACF. In an implementation, the NSACF may notify a data analysis network element to determine the UE having the service continuity requirement in the UEs managed by the NSACF. The data analysis network element may be a network data analysis function (network data analysis function, NWDAF) network element, or another network element having an analysis function. This is not limited in this application. In another implementation, the NSACF may alternatively determine, in another manner, the UE having the service continuity requirement in the UEs managed by the NSACF, for example, query for subscription data of the UE and determine, based on the subscription data, whether the UE has service continuity. A manner in which the NSACF determines the UE having the service continuity requirement in the UEs managed by the NSACF is not limited in this application. With reference to step 802 and step 803, the following describes an implementation for determining, by using the data analysis network element, the UE having the service continuity requirement in the UEs managed by the NSACF.

Step 802: The NSACF sends a request message to the data analysis network element. Correspondingly, the data analysis network element receives the request message.

The request message includes a UE ID of one or more UEs managed by the NSACF.

The request message is used to request to analyze whether the UE has the service continuity requirement.

Optionally, the request message is a subscription request message, and is used to subscribe to a UE having the service continuity requirement.

Step 803: The data analysis network element sends a notification message to the NSACF. Correspondingly, the NSACF receives the notification message.

The notification message includes the UE ID of one or more UEs, and the UE is a UE having the service continuity requirement.

The data analysis network element receives the request message, obtains the one or more UE IDs in the request message, obtains related information of the UE from one or more network elements or devices related to the UE, and analyzes the collected information, to determine the UE having the service continuity requirement in the UEs. For example, if the request message includes 100 UE IDs, and the data analysis network element determines that 80 UEs in the request message have the service continuity requirement, the notification message includes UE IDs of the 80 UEs.

A method for identifying the UE having the service continuity requirement by the data analysis network element is not limited in this embodiment of this application. For example, the data analysis network element may determine, based on historical movement record information of the UE, switching information of a radio access technology, roaming record information, and the like, whether the UE has the service continuity requirement.

Step 804: The NSACF sends a request message to a management device. Correspondingly, the management device receives the request message.

The request message includes S-NSSAI and the UE ID of the one or more UEs. The UE is a UE having the service continuity requirement. The request message is used to request to manage use of the network slice by the UE having the service continuity requirement. The management device is an NSACF configured to manage the UE having the service continuity requirement.

The "management" in this embodiment includes: deleting related information of the UE when the UE deregisters, and recording the related information of the UE when the UE re-registers. The related information of the UE includes but is not limited to at least one of the following: identification information of the UE (namely, the UE ID), identification information of an AMF accessed by the UE, identification information of an SMF + PGW-C accessed by the UE, and identification information of the network slice accessed by the UE (namely, the S-NSSAI).

Step 805: The management device determines whether to accept management for the UE having the service continuity requirement.

If a remaining user quantity quota for the network slice managed by the management device is greater than a quantity of UE IDs in the request message, the management device may manage all the UE IDs in the request message.

If a remaining user quantity quota for the network slice managed by the management device is greater than 0 and less than a quantity of UE IDs in the request message, the management device may manage a part of the quantity of UE IDs in the request message.

If a remaining user quantity quota for the network slice managed by the management device is equal to 0, the management device refuses to manage the UE ID in the request message.

Correspondingly, if the management device manages a part or all of the UE IDs in the request message, the management device needs to modify, based on a quantity of UEs whose management is accepted, a quantity of remaining registrable UEs in the network slice managed by the management device. Specifically, a quantity of actually registered UEs in the network slice managed by the management device needs to be increased accordingly.

In addition, the management device further needs to store related information of the UE whose management is accepted, for example, store one or more of the following: the identification information of the UE, the S-NSSAI corresponding to the UE, or identification information of the NSACF.

For example, the request message includes S-NSSAI 1 and 100 UE IDs. If a remaining user quantity quota of a network slice that corresponds to the S-NSSAI 1 and that is managed by the management device is greater than 100, the management device may manage the 100 UE IDs, or manage a part of the 100 UE IDs. If a remaining user quantity quota of a network slice that corresponds to the S-NSSAI 1 and that is managed by the management device is greater than 0 and less than 100, the management device may manage a part of the 100 UE IDs. Correspondingly, the management device needs to increase the quantity of actually registered UEs in the network slice accordingly. For example, if the management device determines to manage 50 of the 100 UE IDs, the management device needs to increase the quantity of actually registered UEs in the network slice by 50.

Step 806: The management device sends a response message to the NSACF. Correspondingly, the NSACF receives the response message.

If the management device determines to manage a part or all of the UE IDs in the request message, the response message includes the UE ID managed by the management device, and the NSACF locally deletes related information of a UE, for example, deletes information such as the UE ID. In other words, the UE is already managed by the management device, and the NSACF no longer manages the UE. Correspondingly, the NSACF needs to modify the quantity of actually registered UEs in the network slice or the quantity of remaining registrable UEs in the network slice.

If the management device determines to manage no UE ID in the request message, the response message does not include any information, or includes indication information indicating to refuse to manage.

In the foregoing solution, the NSACF may request the data analysis network element to analyze data of the UEs managed by the NSACF, to discover the UE having the service continuity requirement. Then, the NSACF sends information about the UE having the service continuity requirement to the management device, and the management device manages the UE. Subsequently, when the UE moves across service areas, or a radio access technology of the UE changes, or the UE roams, the management device grants the UE permission to use the network slice. This can avoid user quantity quota insufficiency caused by a change of the NSACF, and therefore can ensure service continuity of the UE.

FIG. 9 is a schematic flowchart of a network slice management method according to an embodiment of this application. The method includes the following steps.

Step 901: A first network element determines that a user quantity for a network slice needs to be modified.

Step 902: The first network element sends a request message to an NSACF. Correspondingly, the NSACF receives the request message.

Step 901 and step 902 are the same as step 301 and step 302 in the embodiment of FIG. 3. Refer to the foregoing descriptions.

After receiving the request message from the first network element, the NSACF determines that a modification type is increase, and the NSACF checks a user quantity quota for the network slice managed by the NSACF.

In a case, if there is a remaining user quantity quota for the network slice managed by the NSACF, the following step 907 is performed after step 902, and the following step 903 to step 906 do not need to be performed. In addition, indication information sent in step 907 indicates to grant access to the network slice, and the indication information is also referred to as granting indication information. The NSACF increases a quantity of actually registered users in the network slice by 1, and/or decreases a quantity of remaining registrable users in the network slice by 1. In addition, the NSACF further records information such as a UE ID and an NF ID. It should be noted that, if a plurality of UE IDs are carried in step 902, and the NSACF can grant permission to the plurality of UEs, the NSACF increases the quantity of actually registered users in the network slice managed by the NSACF by n, and/or decreases the quantity of remaining registrable users in the network slice by n, where n is a quantity of UEs to which the permission is granted.

In another case, if it is determined that there is no remaining user quantity quota for the network slice managed by the NSACF, the following step 903 is performed after step 902.

Step 903: The NSACF sends a request message to a management device. Correspondingly, the management device receives the request message.

The NSACF determines the management device based on S-NSSAI, in other words, determines the management device corresponding to the S-NSSAI.

Content carried in the request message in step 903 is the same as content carried in the request message in step 902.

The management device receives the request message, and finds that there is no remaining user quantity quota for the network slice managed by the management device, in other words, a quantity of remaining registrable UEs in the network slice managed by the management device is equal to 0. In this case, the management device may determine to grant temporary permission first, and then reclaim some quotas from one or more NSACFs corresponding to the management device. Specifically, the management device performs the following step 904 and step 905, and a sequence of the two steps is not limited.

Step 904: The management device sends an indication message to the NSACF. Correspondingly, the NSACF receives the indication message.

The indication information is indication information indicating to grant access to the network slice, and the indication information is also referred to as granting indication information.

Because there is no remaining user quantity quota for the network slice managed by the management device in this case, the permission is actually temporary permission, and whether the permission can be successfully granted at last depends on whether the management device can obtain a new user quantity quota for the network slice.

Before, after, or when performing step 904, the management device further performs the following step 905.

Step 905: The management device sends a request message to another NSACF. Correspondingly, the another NSACF receives the request message.

The request message is also referred to as a quota modification request message.

The another NSACF herein refers to another NSACF other than the foregoing NSACF. Certainly, in actual application, the management device may alternatively send the request message to both the another NSACF and the foregoing NSACF. This is not limited in this application.

The another NSACF herein may be one or more NSACFs.

The request message includes the S-NSSAI, and is used to request for or subscribe to reclamation of a quota of registrable UEs in the network slice managed by the another NSACF.

Step 906: The another NSACF sends a quota allowed to be reclaimed to the management device. Correspondingly, the management device receives the quota allowed to be reclaimed.

In an implementation, the quota allowed to be reclaimed is all the remaining quota in a user quantity quota for the network slice managed by the another NSACF. In other words, the remaining quota in the user quantity quota for the network slice is not retained by the another NSACF, but fully managed by the management device.

In another implementation, the quota allowed to be reclaimed is a part of the remaining quota in the user quantity quota for the network slice managed by the another NSACF. In other words, the another NSACF may determine to retain a part of the remaining quota in the user quantity quota for the network slice, and the management device reclaims the other part of the remaining quota in the user quantity quota for the network slice.

After receiving the quota allowed to be reclaimed, the management device adjusts the user quantity quota for the network slice managed by the management device and the remaining quota in the user quantity quota for the network slice, and then the management device further decreases the remaining quota by 1, to indicate that formal permission is granted to the UE to which the temporary permission is granted, so that the permission is successfully granted to the UE. In addition, the management device further records information such as the UE ID. It should be noted that, if a plurality of UE IDs are carried in step 902 and step 903, and after the management device reclaims the quota, an adjusted remaining quota can meet a requirement for granting permission to the plurality of UEs, the management device increases a quantity of actually registered users in the network slice managed by the management device by n, and/or decreases a quantity of remaining registrable users in the network slice by n, where n is a quantity of UEs to which the permission is granted. If the adjusted remaining quota is less than a quantity of UEs requesting permission, requests of only a part of the UEs can be granted. Therefore, the management device grants a part of the UEs the permission, and denies the other part of the UEs the permission.

After sending the quota allowed to be reclaimed to the management device, the another NSACF adjusts the user quantity quota for the network slice managed by the another NSACF and the remaining quota in the user quantity quota for the network slice. After the user quantity quota for the network slice managed by the another NSACF and the user quantity quota for the network slice managed by the management device are adjusted, a sum of the user quantity quota for the network slice managed by the management device and the user quantity quota for the network slice managed by the NSACF does not change. For example, before the adjustment, a total user quantity quota of a network slice 1 is 8000, and the network slice 1 is managed by the management device, an NSACF 1, an NSACF 2, and an NSACF 3. A user quantity quota for the network slice managed by the management device is 2000 and a remaining quota is 0, a user quantity quota for the network slice managed by the NSACF 1 is 1000 and a remaining quota is 200, a user quantity quota for the network slice managed by the NSACF 2 is 2000 and a remaining quota is 300, and a user quantity quota for the network slice managed by the NSACF 3 is 3000 and a remaining quota is 500. After the adjustment, a user quantity quota for the network slice managed by the management device is 2700 and a remaining quota is 699, a user quantity quota for the network slice managed by the NSACF 1 is 900 and a remaining quota is 100, a user quantity quota for the network slice managed by the NSACF 2 is 1800 and a remaining quota is 100, and a user quantity quota for the network slice managed by the NSACF 3 is 2600 and a remaining quota is 100. In other words, the management device reclaims a quota of 100 users, a quota of 200 users, and a quota of 400 users from the NSACF 1, the NSACF 2, and the NSACF 3, respectively.

In an implementation, if the request message in step 905 is a subscription request message, step 906 may be performed a plurality of times. Specifically, once the another NSACF finds that a UE is released from the network slice, the another NSACF may return, to the management device, a remaining quota that is of the network slice and that is obtained by releasing the UE. Optionally, if the management device determines that a reclaimed user quantity quota meets a preset condition, for example, exceeds a preset threshold, the management device may send a request message to the another NSACF, to request to stop reclaiming a quota of registrable UEs in the network slice managed by the another NSACF.

In an implementation, after performing step 904, the management device starts a timer, where the timer indicates maximum duration of temporary grant of access of the UE to the network slice. If the management device receives the quota allowed to be reclaimed in step 906 before the timer expires, the management device determines that the temporary grant granted to the UE can be converted into the formal permission, and then the management device performs the operation described above. Specifically, the operation includes: adjusting the user quantity quota for the network slice managed by the management device and the remaining quota in the user quantity quota for the network slice, and modifying the remaining quota. If the management device does not receive the quota allowed to be reclaimed from the another NSACF before the timer expires, or receives the quota allowed to be reclaimed from the another NSACF after the timer expires, the management device determines that the permission fails to be granted to the UE. Therefore, the management device may notify the UE to cancel the permission. Specifically, the management device sends indication information to the NSACF, where the indication information indicates to reject access of the UE to the network slice. The indication information indicating to reject access of the UE to the network slice is performed after step 906 and step 907. To be specific, the temporary grant is first granted to the UE via the indication information in step 904 and indication information in step 907 (that is, the UE is granted access to the network slice), and then the permission is canceled via the indication information obtained after step 907 (that is, the UE is denied access to the network slice).

Step 907: The NSACF sends an indication message to the first network element. Correspondingly, the first network element receives the indication message.

The indication message indicates to grant access to the network slice.

In a case, step 907 is performed after the NSACF grants a registration request of the UE. To be specific, after step 902, the NSACF grants the registration request of the UE, and then performs step 907. Step 903 to step 906 do not need to be performed.

In another case, step 907 is performed after step 904. To be specific, the management device indicates to grant the registration request of the UE in step 904, and then the NSACF forwards the indication information to the first network element in step 907.

The following describes the embodiment of FIG. 9 with reference to an example in FIG. 5. When the UE previously requests to register with the network slice 1, a network element 1 (for example, an AMF) in the area 1 requests the NSACF 1 in the area 1 to grant the UE permission to use the network slice 1. Subsequently, because the UE moves across service areas, a radio access technology of the UE changes, or the UE roams, the UE needs to re-register with the network slice 1, and a network element 2 (for example, an AMF) in the area 2 requests the NSACF 2 in the area 2 to grant the UE permission to use the network slice 1. After receiving the request message, the NSACF 2 determines that a user quantity quota for the network slice 1 managed by the NSACF 2 is already allocated, and forwards the request message to the management device. Then, the management device finds that a user quantity quota for the network slice 1 managed by the management device is also already allocated. In this case, the management device grants the UE permission to use the network slice 1 and starts a timer. In addition, the management device requests to reclaim a part or all of a remaining quota of an NSACF corresponding to the management device (for example, one or more NSACFs of the NSACF 1 and the NSACF 2 in FIG. 5 and another NSACF). For example, if a current remaining quota in a user quantity quota for the network slice managed by the NSACF 1 is 100, the NSACF 1 may return a part or all of the remaining quota of 100 users to the management device. For example, if 50 users are returned, the NSACF 1 decreases both the user quantity quota and the remaining quota by 50, and the management device increases both the user quantity quota and a remaining quota by 50. Further, the management device further needs to decrease the remaining quota in the user quantity quota for the network slice managed by the management device by 1, to indicate that the permission is successfully granted to the UE. In addition, the management device stores information such as the UE ID and the NF ID.

It should be noted that, if the management device receives a quota of 50 users after the timer expires, the management device still may modify the user quantity quota and the remaining quota of the network slice 1 managed by the management device. In addition, after the timer expires, the management device notifies the UE to cancel the permission. In other words, the temporary grant for the current UE is canceled, but the reclaimed remaining quota may be used for a subsequent request of another UE for access to the network slice.

In an implementation, after the management device receives the request message in step 903, if the management device finds that the remaining quota of the network slice managed by the management device is 0, the management device may obtain a registration type of the UE. For example, the registration type of the UE is carried in the request message in step 902 and the request message in step 903. If the registration type is initial registration, the management device may reject access of the UE to the network slice. If the registration type is update registration, the management device performs the method according to step 904 to step 906. In other words, in this method, the temporary grant is granted to a UE only whose registration type is update registration, but not granted to a UE whose registration type is initial registration. The update registration herein may be movement-triggered update registration caused by movement of the UE across registration areas, or movement-triggered update registration caused by roaming, or switching-triggered update registration caused by switching of a radio access technology.

In the foregoing solution, for a UE having a service continuity requirement, if the user quantity quota for the network slice managed by the management device is already allocated, the management device may first grant temporary grant to the UE. To be specific, the management device grants access of the UE to the network slice, and then requests the NSACF to reclaim a user quantity quota. After the user quantity quota is successfully reclaimed, the management device determines that the permission is successfully granted to the UE. Because the management device can successfully grant a request of the UE for accessing the network slice, service continuity of the UE can be ensured.

FIG. 10 is a schematic flowchart of a network slice management method according to an embodiment of this application. The method includes the following steps.

Step 1001: A management device determines that a quantity of remaining registrable UEs in a network slice managed by the management device is less than a first threshold.

The first threshold herein is a positive integer.

Step 1002: The management device sends a request message to an NSACF. Correspondingly, the NSACF receives the request message.

The NSACF herein may be one or more NSACFs.

The request message includes S-NSSAI, and is used to request for or subscribe to reclamation of a quota of registrable UEs in the network slice managed by the NSACF.

Step 1003: The NSACF sends a quota allowed to be reclaimed to the management device. Correspondingly, the management device receives the quota allowed to be reclaimed.

In an implementation, the quota allowed to be reclaimed is all the remaining quota in a user quantity quota for the network slice managed by the NSACF. In other words, the remaining quota in the user quantity quota for the network slice is not retained by the NSACF, but fully reclaimed by the management device.

In another implementation, the quota allowed to be reclaimed is a part of the remaining quota in the user quantity quota for the network slice managed by the NSACF. In other words, the NSACF may determine to retain a part of the remaining quota in the user quantity quota for the network slice, and the management device reclaims the other part of the remaining quota in the user quantity quota for the network slice.

Step 1004: The management device modifies, based on the quota allowed to be reclaimed, a quota of registrable UEs in the network slice managed by the management device.

The quota of registrable UEs in the network slice managed by the management device is a user quantity quota for the network slice managed by the management device.

In an implementation, if the request message in step 1002 is a subscription request message, step 1003 may be performed a plurality of times. Specifically, once the NSACF finds that a UE is released from the network slice, the NSACF may return, to the management device, a remaining quota that is of the network slice and that is obtained by releasing the UE.

Optionally, the following step 1005 and step 1006 are further performed after step 1004.

Step 1005: The management device determines that a quantity of remaining registrable UEs in the network slice managed by the management device is greater than a second threshold.

The second threshold herein is a positive integer greater than the first threshold.

Step 1006: The management device sends a request message to an NSACF. Correspondingly, the NSACF receives the request message.

The NSACF herein is the NSACF in step 1002.

The request message is used to request to stop reclaiming a quota of registrable UEs in the network slice managed by the NSACF.

In other words, if the management device determines that a reclaimed user quantity quota meets a preset condition, for example, exceeds the second threshold, the management device stops reclamation of the quota of the network slice.

In the foregoing solution, the management device may dynamically adjust the quota of registrable UEs in the network slice managed by the management device, to ensure that a sufficient quota is allocated to UEs that need permission, and avoid service interruption caused by a registration failure of the UE. Therefore, service continuity of the UE can be ensured.

FIG. 11 is a schematic flowchart of a network slice management method according to an embodiment of this application. The method includes the following steps.

Step 1101: An NSACF sends a request message to a management device. Correspondingly, the management device receives the request message.

The request message includes identification information of a UE (UE ID), identification information of a network slice (S-NSSAI), and indication information. The indication information indicates a registration type of the UE, and the registration type is initial registration or update registration. The update registration herein may be mobility update registration caused by movement of the UE across registration areas, or handover update registration caused by handover of a radio access technology.

The request message is used to request to grant access of the UE to the network slice.

In an implementation, if the NSACF receives the request message and finds that a quantity of remaining registrable UEs in the network slice managed by the NSACF is equal to 0, the NSACF forwards the request message to the management device, to request the management device to grant permission to the UE.

Step 1102: The management device sends indication information to the NSACF. Correspondingly, the NSACF receives the indication information.

When a quantity of remaining registrable UEs in the network slice managed by the management device is less than a first threshold, and the registration type is initial registration, the indication information indicates to reject access of the UE to the network slice.

When a quantity of remaining registrable UEs in the network slice managed by the management device is less than a first threshold, and the registration type is update registration, the indication information indicates to grant access of the UE to the network slice. In addition, the management device further decreases the quantity of remaining registrable UEs in the network slice managed by the management device by 1. It should be noted that, if a plurality of UE IDs are carried in step 1101, and the management device can grant permission to the plurality of UEs, the management device increases a quantity of actually registered users in the network slice managed by the management device by n, and/or decreases a quantity of remaining registrable users in the network slice by n, where n is a quantity of UEs to which the permission is granted.

When a quantity of remaining registrable UEs in the network slice managed by the management device is greater than or equal to a first threshold, the indication information indicates to grant access of the UE to the network slice.

In the foregoing solution, when the quantity of remaining registrable UEs in the network slice managed by the management device is less than a threshold, the management device subsequently grants a registration request of a UE only whose registration type is update registration, to avoid service interruption caused by a registration failure of a UE having a service continuity requirement, thereby ensuring service continuity of the UE.

It should be noted that the embodiments of FIG. 6 to FIG. 11 in this application may be implemented separately, or may be implemented in combination with each other. For example, the embodiment of FIG. 6 is implemented in combination with the embodiments of FIG. 8 to FIG. 11. For another example, the embodiment of FIG. 7 is implemented in combination with the embodiments of FIG. 8 to FIG. 11. For another example, the embodiment of FIG. 8 is implemented in combination with the embodiments of FIG. 9 to FIG. 11. For another example, the embodiment of FIG. 9 is implemented in combination with the embodiment of FIG. 11. For another example, the embodiment of FIG. 10 is implemented in combination with the embodiment of FIG. 11. Alternatively, three or more of the embodiments of FIG. 6 to FIG. 11 may be combined for implementation. This is not limited in this application.

It may be understood that, to implement the functions in the foregoing embodiments, the management device or the network slice management network element includes a corresponding hardware structure and/or software module for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

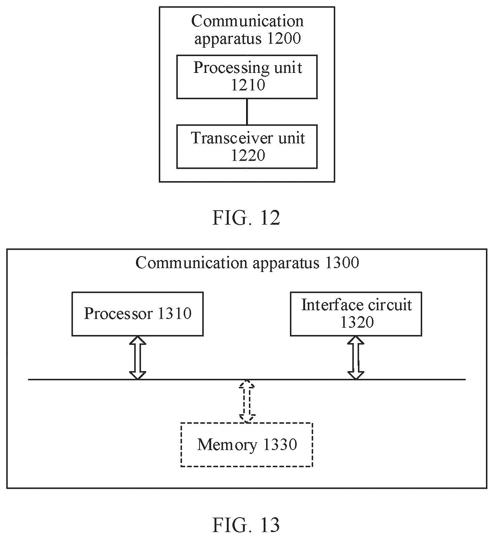

FIG. 12 and FIG. 13 are diagrams of possible structures of communication apparatuses according to embodiments of this application. The communication apparatuses may be configured to implement the functions of the management device or the network slice management network element in the foregoing method embodiments. Therefore, beneficial effects of the foregoing method embodiments can also be achieved. In embodiments of this application, the communication apparatus may be a management device or a network slice management network element, or may be a module (for example, a chip) used in a management device or a module (for example, a chip) used in a network slice management network element.

A communication apparatus 1200 shown in FIG. 12 includes a processing unit 1210 and a transceiver unit 1220. The communication apparatus 1200 is configured to implement the functions of the management device or the network slice management network element in the foregoing method embodiments.

When the communication apparatus 1200 is configured to implement the functions of the management device in the foregoing method embodiments, the transceiver unit 1220 is configured to receive a first request message from a network slice management network element, where the first request message includes identification information of a terminal device, identification information of a network slice, and first indication information, the first indication information indicates a registration type of the terminal device, and the first request message is used to request to grant access of the terminal device to the network slice. When a quantity of remaining registrable terminal devices in the network slice managed by the management device is less than a first threshold, and the registration type is initial registration, the management device sends second indication information to the network slice management network element, where the second indication information indicates to reject access of the terminal device to the network slice. When the quantity of remaining registrable terminal devices in the network slice managed by the management device is less than the first threshold, and the registration type is update registration, the management device sends third indication information to the network slice management network element, and modifies the quantity of remaining registrable terminal devices in the network slice managed by the management device, where the third indication information indicates to grant access of the terminal device to the network slice.

In a possible implementation, when the quantity of remaining registrable terminal devices in the network slice managed by the management device is greater than or equal to the first threshold, the transceiver unit 1220 is further configured to send fourth indication information to the network slice management network element, where the fourth indication information indicates to grant access of the terminal device to the network slice.

When the communication apparatus 1200 is configured to implement the functions of the management device in the foregoing method embodiments, the transceiver unit 1220 is configured to receive a first request message from a first network slice management network element, where the first request message includes identification information of a terminal device and identification information of a network slice, the first request message is used to request to grant access of the terminal device to the network slice, and the management device is a network slice management network element configured to manage a terminal device having a service continuity requirement. When a quantity of remaining registrable terminal devices in the network slice managed by the management device is equal to 0, the management device sends first indication information to the first network slice management network element, where the first indication information indicates to grant access of the terminal device to the network slice. The management device sends a second request message to at least one network slice management network element corresponding to the management device, where the second request message is used to request for or subscribe to reclamation of a quota of registrable terminal devices in the network slice managed by the at least one network slice management network element.

In a possible implementation, the transceiver unit 1220 is further configured to start a timer after sending the first indication information to the first network slice management network element, where the timer indicates maximum duration of temporary grant to access the network slice by the terminal device.

In a possible implementation, the processing unit 1210 is configured to: when the transceiver unit 1220 receives a quota allowed to be reclaimed from the at least one network slice management network element before the timer expires, modify, based on the quota allowed to be reclaimed, a quota of registrable terminal devices in the network slice managed by the management device; and modify the quantity of remaining registrable terminal devices in the network slice managed by the management device.

In a possible implementation, the transceiver unit 1220 is further configured to send second indication information to the first network slice management network element when the timer expires and the transceiver unit 1220 fails to receive the quota allowed to be reclaimed from the at least one network slice management network element, where the second indication information indicates to reject access of the terminal device to the network slice.

In a possible implementation, the transceiver unit 1220 is further configured to send a third request message to the at least one network slice management network element, where the third request message is used to request to stop reclamation of the quota of registrable terminal devices in the network slice managed by the at least one network slice management network element.

In a possible implementation, the first request message further includes third indication information, and the third indication information indicates a registration type of the terminal device. The processing unit 1210 is configured to determine, before the transceiver unit 1220 sends the first indication information to the first network slice management network element, that the registration type is update registration.

When the communication apparatus 1200 is configured to implement the functions of the management device in the foregoing method embodiments, the transceiver unit 1220 is configured to: when a quantity of remaining registrable terminal devices in a network slice managed by the management device is less than a first threshold, send a first request message to at least one network slice management network element corresponding to the management device, where the first request message is used to request for or subscribe to reclamation of a quota of registrable terminal devices in the network slice managed by the at least one network slice management network element; and receive a quota allowed to be reclaimed from the at least one network slice management network element; and the processing unit 1210 is configured to modify, based on the quota allowed to be reclaimed, a quota of registrable terminal devices in the network slice managed by the management device.

In a possible implementation, the transceiver unit 1220 is further configured to send a second request message to the at least one network slice management network element, where the second request message is used to request to stop reclamation of the quota of registrable terminal devices in the network slice managed by the at least one network slice management network element.

In a possible implementation, the processing unit 1210 is further configured to determine, before the transceiver unit 1220 sends the second request message to the at least one network slice management network element, that the quota of registrable terminal devices in the network slice managed by the management device is greater than a second threshold, where the second threshold is greater than the first threshold.

When the communication apparatus 1200 is configured to implement the functions of the management device in the foregoing method embodiments, the transceiver unit 1220 is configured to receive a request message from a network slice management network element, where the request message includes identification information of a network slice and identification information of a terminal device having a service continuity requirement, and the request message is used to request to manage use of the network slice by the terminal device having the service continuity requirement; and the processing unit 1210 is configured to determine, based on a quantity of remaining registrable terminal devices in the network slice managed by the management device, whether to accept management for the terminal device having the service continuity requirement.

In a possible implementation, the transceiver unit 1220 is further configured to send identification information of at least one terminal device to the network slice management network element, where the at least one terminal device is a terminal device that is in the terminal device having the service continuity requirement and whose management is accepted by the management device.

In a possible implementation, the processing unit 1210 is further configured to modify, based on a quantity of the at least one terminal device, the quantity of remaining registrable terminal devices in the network slice managed by the management device.

In a possible implementation, the processing unit 1210 is further configured to store a part or all of the following information: the identification information of the at least one terminal device, the identification information of the network slice, or identification information of the network slice management network element.

When the communication apparatus 1200 is configured to implement the functions of the network slice management network element in the foregoing method embodiments, the processing unit 1210 is configured to determine a terminal device having a service continuity requirement in a terminal device managed by the network slice management network element; and the transceiver unit 1220 is configured to send a first request message to a management network element, where the first request message includes identification information of a network slice and identification information of the terminal device having the service continuity requirement, the first request message is used to request to manage use of the network slice by the terminal device having the service continuity requirement, and the management device is a network slice management network element configured to manage the terminal device having the service continuity requirement.

In a possible implementation, the processing unit 1210 is specifically configured to: send, by using the transceiver unit 1220, a second request message to a data analysis network element, where the second request message includes identification information of the terminal device managed by the network slice management network element, and the second request message is used to request to analyze whether the terminal devices have the service continuity requirement; and receive a notification message from the data analysis network element, where the notification message includes the identification information of the terminal device having the service continuity requirement.

In a possible implementation, the transceiver unit 1220 is further configured to receive identification information of at least one terminal device from the management device, where the at least one terminal device is a terminal device that is in the terminal device having the service continuity requirement and whose management is accepted by the management device. The processing unit 1210 is configured to delete information that is about the at least one terminal device and that is stored in the network slice management network element, and modify, based on a quantity of the at least one terminal device, a quantity of remaining registrable terminal devices in the network slice managed by the network slice management network element.

When the communication apparatus 1200 is configured to implement the functions of the network slice management network element in the foregoing method embodiments, the transceiver unit 1220 is configured to: receive a first request message from a first network element, where the first request message includes identification information of a terminal device, identification information of a network slice, and first indication information, the first indication information indicates that the terminal device is subject to service continuity, and the first request message is used to request to grant access of the terminal device to the network slice; and send a second request message to a management device based on the first indication information, where the second request message includes the identification information of the terminal device, the identification information of the network slice, and the first indication information, the second request message is used to request to grant access of the terminal device to the network slice, and the management device is a network slice management network element configured to manage a terminal device having a service continuity requirement.

In a possible implementation, the transceiver unit 1220 is further configured to receive second indication information from the management device, where the second indication information indicates to grant or reject access of the terminal device to the network slice; and the network slice management network element sends the second indication information to the first network element.

For more detailed descriptions of the processing unit 1210 and the transceiver unit 1220, directly refer to related descriptions in the foregoing method embodiments. Details are not described herein again.

A communication apparatus 1300 shown in FIG. 13 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data needed by the processor 1310 to run the instructions, or store data generated after the processor 1310 runs the instructions.

The communication apparatus 1300 may be the network slice management network element or the management device in the foregoing method embodiments, or may be a module (for example, a chip) used in the network slice management network element or the management device.

When the communication apparatus 1300 is configured to implement the foregoing method embodiments, the processor 1310 is configured to implement a function of the processing unit 1210, and the interface circuit 1320 is configured to implement a function of the transceiver unit 1220.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

In a possible implementation, an embodiment of this application provides a communication apparatus, including a processor and an interface circuit. The processor is configured to communicate with another apparatus by using the interface circuit, and perform any one of the foregoing implementations. There are one or more processors.

In a possible implementation, an embodiment of this application provides a communication apparatus, including a processor coupled to a memory. The processor is configured to invoke a program stored in the memory, to perform any one of the foregoing implementations. The memory may be located inside or outside the apparatus. In addition, there may be one or more processors.

In a possible implementation, an embodiment of this application provides a communication apparatus, including a processor and a memory. The memory is configured to store computer instructions. When the apparatus runs, the processor executes the computer instructions stored in the memory, to enable the apparatus to perform any one of the foregoing implementations.

In a possible implementation, an embodiment of this application further provides a computer-readable storage medium. The computer-readable storage medium stores instructions. When the instructions are run on a communication apparatus, any one of the foregoing implementations is performed.

In a possible implementation, an embodiment of this application further provides a computer program product. The computer program product includes a computer program or instructions. When the computer program or the instructions are run by a communication apparatus, any one of the foregoing implementations is performed.

In a possible implementation, an embodiment of this application further provides a chip system, including a processor, configured to perform any one of the foregoing implementations.

The method steps in embodiments of this application may be implemented by hardware, or may be implemented by a processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. It is clear that the storage medium may be a component of the processor. The processor and the storage medium may be located in an ASIC. In addition, the ASIC may be located in a base station or a terminal. It is clear that the processor and the storage medium may exist in a base station or a terminal as discrete components.

The foregoing embodiments may be wholly or partially implemented by using software, hardware, firmware, or any combination thereof. When software is used to implement the embodiments, the embodiments may be wholly or partially implemented in a form of a computer program product. The computer program product includes one or more computer programs or instructions. When the computer programs or instructions are loaded and executed on a computer, the processes or functions in embodiments of this application are wholly or partially executed. The computer may be a general-purpose computer, a dedicated computer, a computer network, a base station, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include both a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and indicates that three relationships may exist. For example, A and/or B may represent the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A network slice management method, comprising:
receiving, by a management device, a first request message from a network slice management network element, wherein the first request message comprises identification information of a terminal device, identification information of a network slice, and first indication information, the first indication information indicates a registration type of the terminal device, and the first request message is used to request to grant access of the terminal device to the network slice;
when a quantity of remaining registrable terminal devices in the network slice managed by the management device is less than a first threshold, and the registration type is initial registration, sending, by the management device, second indication information to the network slice management network element, wherein the second indication information indicates to reject access of the terminal device to the network slice; and
when the quantity of remaining registrable terminal devices in the network slice managed by the management device is less than the first threshold, and the registration type is update registration, sending, by the management device, third indication information to the network slice management network element, and modifying, by the management device, the quantity of remaining registrable terminal devices in the network slice managed by the management device, wherein the third indication information indicates to grant access of the terminal device to the network slice.

2. The method according to claim 1, wherein the method further comprises:
when the quantity of remaining registrable terminal devices in the network slice managed by the management device is greater than or equal to the first threshold, sending, by the management device, fourth indication information to the network slice management network element, wherein the fourth indication information indicates to grant access of the terminal device to the network slice.

3. A network slice management method, comprising:
receiving, by a management device, a first request message from a first network slice management network element, wherein the first request message comprises identification information of a terminal device and identification information of a network slice, the first request message is used to request to grant access of the terminal device to the network slice, and the management device is a network slice management network element configured to manage a terminal device having a service continuity requirement;
when a quantity of remaining registrable terminal devices in the network slice managed by the management device is equal to 0, sending, by the management device, first indication information to the first network slice management network element, wherein the first indication information indicates to grant access of the terminal device to the network slice; and
sending, by the management device, a second request message to at least one network slice management network element corresponding to the management device, wherein the second request message is used to request for or subscribe to reclamation of a quota of registrable terminal devices in the network slice managed by the at least one network slice management network element.

4. The method according to claim 3, wherein the method further comprises:
after the management device sends the first indication information to the first network slice management network element, starting, by the management device, a timer, wherein the timer indicates maximum duration of temporary grant of access of the terminal device to the network slice.

5. The method according to claim 4, wherein the method further comprises:
when the management device receives a quota allowed to be reclaimed from the at least one network slice management network element before the timer expires, modifying, by the management device based on the quota allowed to be reclaimed, a quota of registrable terminal devices in the network slice managed by the management device; and
modifying, by the management device, the remaining registrable terminal devices in the network slice managed by the management device.

6. The method according to claim 4, wherein the method further comprises:
when the timer expires and the management device fails to receive a quota allowed to be reclaimed from the at least one network slice management network element, sending, by the management device, second indication information to the first network slice management network element, wherein the second indication information indicates to reject access of the terminal device to the network slice.

7. The method according to any one of claims 3 to 6, wherein the method further comprises:
sending, by the management device, a third request message to the at least one network slice management network element, wherein the third request message is used to request to stop reclamation of the quota of registrable terminal devices in the network slice managed by the at least one network slice management network element.

8. The method according to any one of claims 3 to 5, wherein the first request message further comprises third indication information, and the third indication information indicates a registration type of the terminal device; and
before the sending, by the management device, the first indication information to the first network slice management network element, the method further comprises:
determining, by the management device, that the registration type is update registration.

9. A network slice management method, comprising:
when a quantity of remaining registrable terminal devices in a network slice managed by a management device is less than a first threshold, sending, by the management device, a first request message to at least one network slice management network element corresponding to the management device, wherein the first request message is used to request for or subscribe to reclamation of a quota of registrable terminal devices in the network slice managed by the at least one network slice management network element;
receiving, by the management device, a quota allowed to be reclaimed from the at least one network slice management network element; and
modifying, by the management device based on the quota allowed to be reclaimed, a quota of registrable terminal devices in the network slice managed by the management device.

10. The method according to claim 9, wherein the method further comprises:
sending, by the management device, a second request message to the at least one network slice management network element, wherein the second request message is used to request to stop reclamation of the quota of registrable terminal devices in the network slice managed by the at least one network slice management network element.

11. The method according to claim 10, wherein before the sending, by the management device, the second request message to the at least one network slice management network element, the method further comprises:
determining, by the management device, that the quota of registrable terminal devices in the network slice managed by the management device is greater than a second threshold, wherein the second threshold is greater than the first threshold.

12. A network slice management method, comprising:
receiving, by a management device, a request message from a network slice management network element, wherein the request message comprises identification information of a network slice and identification information of a terminal device having a service continuity requirement, and the request message is used to request to manage use of the network slice by the terminal device having the service continuity requirement; and
determining, by the management device based on a quantity of remaining registrable terminal devices in the network slice managed by the management device, whether to accept management for the terminal device having the service continuity requirement.

13. The method according to claim 12, wherein the method further comprises:
sending, by the management device, identification information of at least one terminal device to the network slice management network element, wherein the at least one terminal device is a terminal device that is in the terminal device having the service continuity requirement and whose management is accepted by the management device.

14. The method according to claim 13, wherein the method further comprises:
modifying, by the management device based on a quantity of the at least one terminal device, the quantity of remaining registrable terminal devices in the network slice managed by the management device.

15. The method according to claim 13 or 14, wherein the method further comprises:
storing, by the management device, a part or all of the following information: the identification information of the at least one terminal device, the identification information of the network slice, or identification information of the network slice management network element.

16. A network slice management method, comprising:
determining, by a network slice management network element, a terminal device having a service continuity requirement in a terminal device managed by the network slice management network element; and
sending, by the network slice management network element, a first request message to a management network element, wherein the first request message comprises identification information of a network slice and identification information of the terminal device having the service continuity requirement, the first request message is used to request to manage use of the network slice by the terminal device having the service continuity requirement, and the management device is a network slice management network element configured to manage a terminal device having the service continuity requirement.

17. The method according to claim 16, wherein the determining, by a network slice management network element, a terminal device having a service continuity requirement in a terminal device managed by the network slice management network element comprises:
sending, by the network slice management network element, a second request message to a data analysis network element, wherein the second request message comprises identification information of the terminal device managed by the network slice management network element, and the second request message is used to request to analyze whether the terminal device has the service continuity requirement; and
receiving, by the network slice management network element, a notification message from the data analysis network element, wherein the notification message comprises the identification information of the terminal device having the service continuity requirement.

18. The method according to claim 16 or 17, wherein the method further comprises:
receiving, by the network slice management network element, identification information of at least one terminal device from the management device, wherein the at least one terminal device is a terminal device that is in the terminal device having the service continuity requirement and whose management is accepted by the management device; and
deleting, by the network slice management network element, information that is about the at least one terminal device and that is stored by the network slice management network element, and modifying, by the network slice management network element based on a quantity of the at least one terminal device, a quantity of remaining registrable terminal devices in the network slice managed by the network slice management network element.

19. A network slice management method, comprising:
receiving, by a network slice management network element, a first request message from a first network element, wherein the first request message comprises identification information of a terminal device, identification information of a network slice, and first indication information, the first indication information indicates that the terminal device is subject to service continuity, and the first request message is used to request to grant access of the terminal device to the network slice; and
sending, by the network slice management network element, a second request message to a management device based on the first indication information, wherein the second request message comprises the identification information of the terminal device, the identification information of the network slice, and the first indication information, the second request message is used to request to grant access of the terminal device to the network slice, and the management device is a network slice management network element configured to manage a terminal device having a service continuity requirement.

20. The method according to claim 19, wherein the method further comprises:
receiving, by the network slice management network element, second indication information from the management device, wherein the second indication information indicates to grant or reject access of the terminal device to the network slice; and
sending, by the network slice management network element, the second indication information to the first network element.

21. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus; and the processor is configured to implement the method according to claim 1 or 2, or configured to implement the method according to any one of claims 3 to 8, or configured to implement the method according to any one of claims 9 to 11, or configured to implement the method according to any one of claims 12 to 15, or configured to implement the method according to any one of claims 16 to 18, or configured to implement the method according to claim 19 or 20 by using a logic circuit or by executing code instructions.

22. A communication apparatus, comprising:
a memory, configured to store a computer program; and
a processor, configured to invoke the computer program from the memory and run the computer program, to perform the method according to claim 1 or 2, or perform the method according to any one of claims 3 to 8, or perform the method according to any one of claims 9 to 11, or perform the method according to any one of claims 12 to 15, or perform the method according to any one of claims 16 to 18, or perform the method according to claim 19 or 20.

23. A computer-readable storage medium, wherein the storage medium stores a computer program or instructions; and when the computer program or the instructions are executed by a communication apparatus, the method according to claim 1 or 2 is implemented, or the method according to any one of claims 3 to 8 is implemented, or the method according to any one of claims 9 to 11 is implemented, or the method according to any one of claims 12 to 15 is implemented, or the method according to any one of claims 16 to 18 is implemented, or the method according to claim 19 or 20 is implemented.

24. A communication system, comprising a network slice management network element and a management device that is configured to perform the method according to claim 1 or 2, wherein
the network slice management network element is configured to send a first request message to the management device, the first request message comprises identification information of a terminal device, identification information of a network slice, and first indication information, the first indication information indicates a registration type of the terminal device, and the first request message is used to request to grant access of the terminal device to the network slice.

25. A communication system, comprising a first network slice management network element and a management device that is configured to perform the method according to any one of claims 3 to 8, wherein
the first network slice management network element is configured to send a first request message to the management device, and the first request message is used to request to grant access of a terminal device to a network slice.

26. A communication system, comprising at least one network slice management network element and a management device that is configured to perform the method according to any one of claims 9 to 11, wherein
the at least one network slice management network element is configured to: receive a first request message from the management device, wherein the first request message is used to request for or subscribe to reclamation of a quota of registrable terminal devices in a network slice managed by the at least one network slice management network element; and send a quota allowed to be reclaimed to the management device.

27. A communication system, comprising a network slice management network element configured to perform the method according to any one of claims 16 to 18 and a management device configured to perform the method according to any one of claims 12 to 15.

28. A communication system, comprising a first network element and a network slice management network element that is configured to perform the method according to claim 19 or 20, wherein
the first network element is configured to send a first request message to the network slice management network element, the first request message comprises identification information of a terminal device, identification information of a network slice, and first indication information, the first indication information indicates that the terminal device is subject to service continuity, and the first request message is used to request to grant access of the terminal device to the network slice.
